(19) Europäisches Patentamt
European Patent Office
Office européen des brevets

(11) EP 4 578 879 A1

(12) EUROPEAN PATENT APPLICATION

(43) Date of publication:
**02.07.2025 Bulletin 2025/27**

(21) Application number: **24220281.0**

(22) Date of filing: **16.12.2024**

(51) International Patent Classification (IPC):
***C08B 3/00*** *(2006.01)* ***C08B 3/06*** *(2006.01)*

(52) Cooperative Patent Classification (CPC):
**C08B 3/00; C08B 3/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 JP 2023222984**

(71) Applicant: **Koei Chemical Company, Limited**
**Sodegaura-shi, Chiba 299-0266 (JP)**

(72) Inventor: **TAMAKOSHI, Satomi**
**Chiba, 2990266 (JP)**

(74) Representative: **Müller-Boré & Partner**
**Patentanwälte PartG mbB**
**Friedenheimer Brücke 21**
**80639 München (DE)**

# (54) METHOD FOR PRODUCING ESTERIFIED POLYSACCHARIDE

(57) Provided is a method for producing an esterified polysaccharide, the method being capable of recycling a recovery liquid containing an onium salt by removing or reducing carboxylic acid without substantially using a catalyst for esterifying cellulose. The method for producing an esterified polysaccharide comprises the following steps (1) to (8): (1) dissolving a polysaccharide in an onium salt, (2) adding an esterifying agent, (3) adding a solvent to precipitate an esterified polysaccharide, (4) filtering the esterified polysaccharide, (5) removing the solvent from the filtrate, (6) adding an amine to separate the onium salt from the amine-carboxylic acid salt, (7) recovering the onium salt, and (8) recycling the recovered onium salt.

EP 4 578 879 A1

## Description

Technical Field

The present invention relates to a method for producing an esterified polysaccharide.

Background Art

There has been demand for protecting and preserving the global or natural environment, and there has also been demand for chemical substances and functional materials that impose a small burden on, or that are capable of reducing the burden on, the environment. As such chemical substances and functional materials, natural polymers, in particular, polysaccharides or polysaccharide derivatives have been attracting attention.

Among polysaccharides, cellulose is used for films, fibers, pharmaceutical applications, and the like. Cellulose derivatives are also widely used for commercial purposes.

Typically, cellulose is a β-1,4-linked polymer of anhydroglucose, using glucose as a constituent unit. A cellulose derivative is a compound in which the three hydroxyl groups present in each glucose unit constituting cellulose are at least partially derivatized to other functional groups.

Esterified cellulose products obtained by esterifying cellulose, as well as esterified cellulose derivative products obtained by esterifying the remaining hydroxyl groups in cellulose derivatives, are also widely used for commercial purposes.

As a method for producing an esterified cellulose product, for example, PTL 1 discloses a method for producing a cellulose ester, the method comprising dissolving cellulose in a carboxylated ionic liquid, bringing the cellulose solution into contact with an acylation reagent in the presence of a catalyst to prepare a solution containing a cellulose ester, bringing the solution into contact with a non-solvent to precipitate the cellulose ester, separating the precipitated cellulose ester from the carboxylated ionic liquid to recover the cellulose ester, and recycling the separated carboxylated ionic liquid to be used for dissolving cellulose.

Citation List

Patent Literature

PTL 1: JP2010-518244A

Summary of Invention

Technical Problem

The method for producing a cellulose ester disclosed in PTL 1 uses an acylation reagent to esterify cellulose, and further uses a catalyst, i.e., methanesulfonic acid, which is a protonic acid, to increase the esterification rate.

The catalyst is believed to remain in the esterified cellulose, and if it remains, there is a concern that it may affect the quality of the esterified cellulose to be used as a product.

Additionally, since the acylation reagent, i.e., acetic anhydride, is used, and acetic acid remains after acylation of cellulose, methanol is added to remove the remaining acetic acid as methyl acetate. However, the removal or reduction of the remaining acetic acid is not deemed to be sufficient, and further removal or reduction of the acetic acid is required to recycle the carboxylated ionic liquid.

Accordingly, problems lie in that a catalyst is required to esterify cellulose, and that further removal or reduction of acetic acid is required.

Given the current status of the prior art, an object of the present invention is to provide a method for producing an esterified polysaccharide, preferably a method for producing an esterified cellulose, the method being capable of further removing or reducing carboxylic acid without substantially using a catalyst for esterifying cellulose.

Solution to Problem

The present inventors have conducted extensive research into a method for producing an esterified polysaccharide, the method being capable of further removing or reducing carboxylic acid without substantially using a catalyst for esterifying cellulose, and have completed the present invention.

Specifically, the present invention provides the following [1] to [7].

[1] A method for producing an esterified polysaccharide, comprising the following steps (1) to (8):

step (1) of mixing an onium salt represented by Formula (1) with a polysaccharide to dissolve the polysaccharide in the onium salt:

Formula (1):

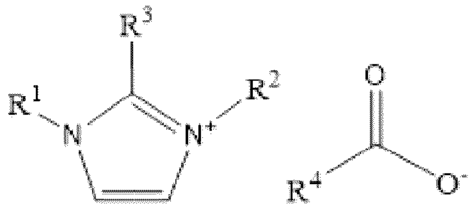

(1)

wherein

$R^1$ and $R^2$ are identical or different, and each represents a hydrocarbon group optionally containing a heteroatom,
$R^1$ and $R^2$ may contain a branched and/or cyclic structure and/or a double bond,
$R^3$ represents a hydrogen atom or a $C_1$-$C_5$ hydrocarbon group, and
$R^4$ represents a $C_1$-$C_{12}$ hydrocarbon group and may contain a heteroatom, a double bond, a branched structure, and/or a cyclic structure;

step (2) of adding an esterification agent represented by Formula (2) or Formula (3) to a mixture obtained in step (1) to generate an esterified polysaccharide:

Formula (2):

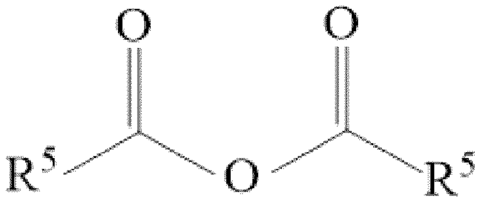

wherein
$R^5$ represents a $C_1$-$C_{12}$ hydrocarbon group and may contain a heteroatom, a double bond, a branched structure, and/or a cyclic structure,

Formula (3):

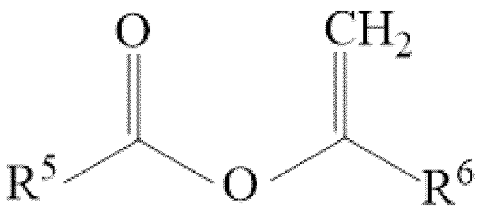

wherein

$R^5$ represents a $C_1$-$C_{12}$ hydrocarbon group and may contain a heteroatom, a double bond, a branched structure, and/or a cyclic structure, and
$R^6$ represents a hydrogen atom or a methyl group;

step (3) of adding to a mixture obtained in step (2) at least one solvent in which esterified polysaccharides are

insoluble, selected from water, alcohols, and ketones, to precipitate the esterified polysaccharide;
step (4) of filtering the esterified polysaccharide precipitated in step (3) to separate the esterified polysaccharide from a filtrate containing the onium salt represented by Formula (1), a carboxylic acid represented by Formula (4), and the solvent in which esterified polysaccharides are insoluble:

Formula (4):

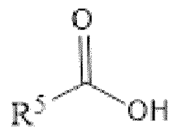

wherein
$R^5$ represents a $C_1$-$C_{12}$ hydrocarbon group and may contain a heteroatom, a double bond, a branched structure, and/or a cyclic structure;
step (5) of heating and/or depressurizing the filtrate separated in step (4) to remove from the filtrate the solvent in which esterified polysaccharides are insoluble;
step (6) of adding an amine represented by Formula (5) to a mixture containing the onium salt represented by Formula (1) and the carboxylic acid represented by Formula (4) obtained in step (5) to generate an amine-carboxylic acid salt, and separating an onium salt-containing layer from an amine-carboxylic acid salt-containing layer:

Formula (5):

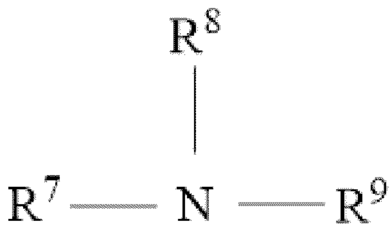

wherein
$R^7$, $R^8$, and $R^9$ may be identical or different, and each represents a hydrogen atom or a $C_1$-$C_{18}$ hydrocarbon group and may contain a double bond, a branched structure, and/or a cyclic structure, and the total number of carbon atoms in $R^7$, $R^8$, and $R^9$ is 8 or more;
step (7) of recovering the onium salt-containing layer separated in step (6) as an onium salt-containing recovery liquid; and
step (8) of introducing the recovery liquid recovered in step (7) into step (1).

[2] The method for producing an esterified polysaccharide according to [1],
wherein in step (6), water and/or a hydrophilic solvent is added to the mixture containing the onium salt represented by Formula (1) and the carboxylic acid represented by Formula (4) obtained in step (5).

[3] The method for producing an esterified polysaccharide according to [1], wherein in step (6),

(i) the amine represented by Formula (5) is added, or
(ii) an amine solution in which the amine is diluted with a hydrophobic solvent is added,
to the mixture containing the onium salt represented by Formula (1) and the carboxylic acid represented by Formula (4) obtained in step (5).

[4] The method for producing an esterified polysaccharide according to [1],
wherein in step (1), the onium salt represented by Formula (1) is of at least two types.

[5] The method for producing an esterified polysaccharide according to [1],
wherein in step (2), the esterification agent represented by Formula (2) or Formula (3) is of at least two types.

[6] The method for producing an esterified polysaccharide according to [1],
wherein in step (1), the onium salt represented by Formula (1) is in the form of an onium salt solution in which the onium salt is diluted with an aprotic polar solvent.

[7] The method for producing an esterified polysaccharide according to [1],
wherein in step (7), the amine represented by Formula (5) is added to the onium salt-containing recovery liquid to generate an amine-carboxylic acid salt, an onium salt-containing layer is separated from an amine-carboxylic acid salt-containing layer, and the separated onium salt-containing layer is recovered as an onium salt-containing recovery liquid.

Advantageous Effects of Invention

According to the present invention, a method for producing an esterified polysaccharide, the method being capable of further removing or reducing carboxylic acid without substantially using a catalyst for esterifying cellulose, can be provided, and the recovery liquid containing an onium salt recovered by this production method can be recycled.

Description of Embodiments

The present invention will be specifically described below. One embodiment of present invention relates to a method for producing an esterified polysaccharide, comprising the following steps (1) to (8):

step (1) of mixing an onium salt represented by Formula (1) with a polysaccharide to dissolve the polysaccharide in the onium salt:

Formula (1):

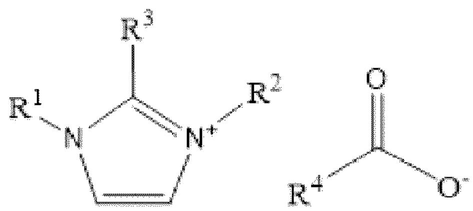

(1)

wherein

R$^1$ and R$^2$ are identical or different, and each represents a hydrocarbon group optionally containing a heteroatom, R$^1$ and R$^2$ may contain a branched and/or cyclic structure and/or a double bond,
R$^3$ represents a hydrogen atom or a $C_1$-$C_5$ hydrocarbon group, and R$^4$ represents a $C_1$-$C_{12}$ hydrocarbon group and may contain a heteroatom, a double bond, a branched structure, and/or a cyclic structure;

step (2) of adding an esterification agent represented by Formula (2) or Formula (3) to a mixture obtained in step (1) to generate an esterified polysaccharide:

Formula (2):

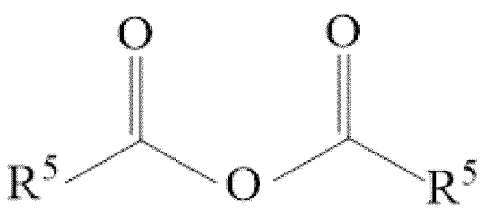

wherein
R$^5$ represents a $C_1$-$C_{12}$ hydrocarbon group and may contain a heteroatom, a double bond, a branched structure, and/or a cyclic structure,

Formula (3):

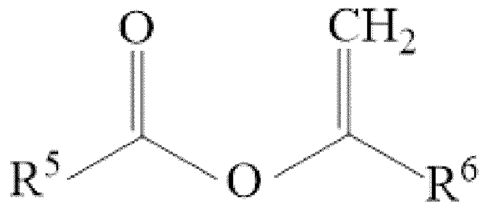

wherein

$R^5$ represents a $C_1$-$C_{12}$ hydrocarbon group and may contain a heteroatom, a double bond, a branched structure, and/or a cyclic structure, and
$R^6$ represents a hydrogen atom or a methyl group;

step (3) of adding to a mixture obtained in step (2) at least one solvent in which esterified polysaccharides are insoluble, selected from water, alcohols, and ketones, to precipitate the esterified polysaccharide;
step (4) of filtering the esterified polysaccharide precipitated in step (3) to separate the esterified polysaccharide from a filtrate containing the onium salt represented by Formula (1), a carboxylic acid represented by Formula (4), and the solvent in which esterified polysaccharides are insoluble:

Formula (4):

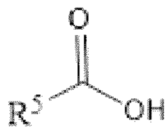

wherein
$R^5$ represents a $C_1$-$C_{12}$ hydrocarbon group and may contain a heteroatom, a double bond, a branched structure, and/or a cyclic structure;
step (5) of heating and/or depressurizing the filtrate separated in step (4) to remove from the filtrate the solvent in which esterified polysaccharides are insoluble;
step (6) of adding an amine represented by Formula (5) to a mixture containing the onium salt represented by Formula (1) and the carboxylic acid represented by Formula (4) obtained in step (5) to generate an amine-carboxylic acid salt, and separating an onium salt-containing layer from an amine-carboxylic acid salt-containing layer:

Formula (5):

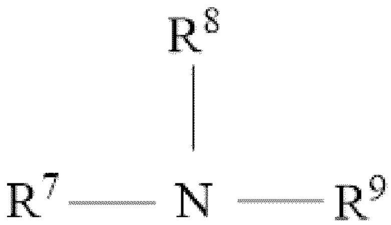

wherein
$R^7$, $R^8$, and $R^9$ may be identical or different, and each represents a hydrogen atom or a $C_1$-$C_{18}$ hydrocarbon group and may contain a double bond, a branched structure, and/or a cyclic structure, and the total number of carbon atoms in $R^7$, $R^8$, and $R^9$ is 8 or more;
step (7) of recovering the onium salt-containing layer separated in step (6) as an onium salt-containing recovery liquid; and
step (8) of introducing the recovery liquid recovered in step (7) into step (1).

The onium salt represented by Formula (1) used in step (1) is of at least one type or at least two types, such as 2 to

5 types, 2 to 4 types, 2 to 3 types, or 2 types.

The esterification agent represented by Formula (2) or Formula (3) used in step (2) is of at least one type or at least two types, such as 2 to 5 types, 2 to 4 types, 2 to 3 types, or 2 types.

In step (1), a polysaccharide can be mixed with an onium salt solution in which at least one onium salt represented by Formula (1) is diluted with at least one aprotic polar solvent.

The onium salt represented by the following Formula (1), which is used in step (1) of the production method of the present invention, is explained below.

Formula (1):

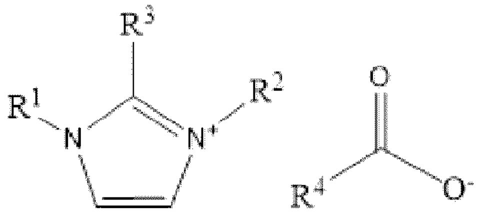

(1)

The onium salt represented by Formula (1) is formed of an imidazolium cation represented by the following Formula (1-1) and a carboxylate anion represented by the following Formula (1-2) .

Formula (1-1):

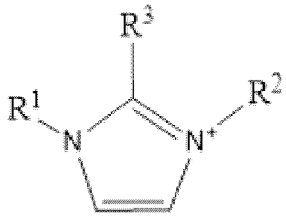

(1-1)

Formula (1-2):

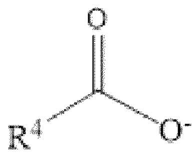

(1-2)

The imidazolium cation represented by the following Formula (1-1) is explained below.

Formula (1-1):

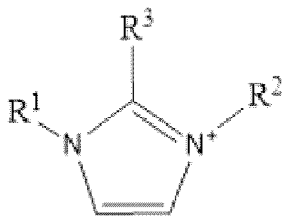

(1-1)

In Formula (1) and Formula (1-1), $R^1$ and $R^2$ are identical or different, and each represents a hydrocarbon group optionally containing a heteroatom. $R^1$ and $R^2$ may contain a branched and/or cyclic structure and/or a double bond. $R^3$ is a hydrogen atom or a $C_1$-$C_5$ hydrocarbon group.

An embodiment in which $R^1$ and $R^2$ in Formula (1) and Formula (1-1) are each a hydrocarbon group containing no heteroatom is explained below.

In Formula (1) and Formula (1-1), when $R^1$ and $R^2$ are each a hydrocarbon group containing no heteroatom, the

number of carbon atoms in the hydrocarbon group is preferably 1 to 12, more preferably 1 to 8, and even more preferably 1 to 3. The hydrocarbon group may be linear and may contain a branched and/or cyclic structure and/or a double bond.

In Formula (1) and Formula (1-1), examples of the "hydrocarbon group containing no heteroatom" for $R^1$ and $R^2$ include a linear or branched alkyl group containing no heteroatom, a linear or branched alkenyl group containing no heteroatom, a linear or branched alkynyl group containing no heteroatom, an optionally branched cycloalkyl group containing no heteroatom, an optionally branched cycloalkenyl group containing no heteroatom, an optionally branched aryl group containing no heteroatom, and an optionally branched aralkyl group containing no heteroatom.

Preferred are a linear or branched alkyl group containing no heteroatom, a linear or branched alkenyl group containing no heteroatom, and an optionally branched cycloalkyl group containing no heteroatom.

In Formula (1) and Formula (1-1), the "linear or branched alkyl group containing no heteroatom" for $R^1$ and $R^2$ is preferably a linear or branched $C_1$-$C_{12}$ alkyl group containing no heteroatom, more preferably a linear or branched $C_1$-$C_8$ alkyl group containing no heteroatom, even more preferably a linear or branched $C_1$-$C_4$ alkyl group containing no heteroatom, and still more preferably a linear or branched $C_1$-$C_3$ alkyl group containing no heteroatom.

In Formula (1) and Formula (1-1), the "linear or branched alkenyl group containing no heteroatom" for $R^1$ and $R^2$ is preferably a linear or branched $C_2$-$C_{12}$ alkenyl group containing no heteroatom, more preferably a linear or branched $C_2$-$C_8$ alkenyl group containing no heteroatom, even more preferably a linear or branched $C_2$-$C_4$ alkenyl group containing no heteroatom, and still more preferably a linear or branched $C_2$-$C_3$ alkenyl group containing no heteroatom.

In Formula (1) and Formula (1-1), the "optionally branched cycloalkyl group containing no heteroatom" for $R^1$ and $R^2$ is preferably an optionally branched $C_3$-$C_{12}$ cycloalkyl group containing no heteroatom, more preferably an optionally branched $C_3$-$C_8$ cycloalkyl group containing no heteroatom, even more preferably an optionally branched $C_3$-$C_4$ cycloalkyl group containing no heteroatom, and still more preferably a $C_3$ cycloalkyl group.

In Formula (1-1), specific examples of the "hydrocarbon group containing no heteroatom" for $R^1$ and $R^2$ include a methyl group, an ethyl group, a propyl group, an isopropyl group, a butyl group, a sec-butyl group, an isobutyl group, a tert-butyl group, a pentyl group, a neopentyl group, a hexyl group, an octyl group, a 2-ethylhexyl group, a decyl group, a dodecyl group, a vinyl group, an ethynyl group, a propenyl group, an isopropenyl group, an allyl group, a propargyl group, a butenyl group, a crotyl group, a butadienyl group, a cyclopropyl group, a cyclobutyl group, a cyclopentyl group, a cyclohexyl group, a norbornyl group, an adamantyl group, a phenyl group, a benzyl group, a tolyl group, a styryl group, and a 2,4,6-trimethylphenyl group. The hydrocarbon group containing no heteroatom is preferably a methyl group, an ethyl group, a propyl group, an isopropyl group, a butyl group, a sec-butyl group, an isobutyl group, a tert-butyl group, a pentyl group, a neopentyl group, and a hexyl group, and more preferably a methyl group, an ethyl group, a propyl group, an isopropyl group, and a tert-butyl group.

An embodiment in which $R^1$ and $R^2$ in Formula (1) and Formula (1-1) are each a hydrocarbon group containing a heteroatom is explained below.

In Formula (1) and Formula (1-1), when $R^1$ and $R^2$ are each a hydrocarbon group containing a heteroatom, the number of carbon atoms is preferably 2 to 12, more preferably 2 to 8, and even more preferably 2 to 4. The hydrocarbon group may be linear and may contain a branched and/or cyclic structure and/or a double bond.

In Formula (1) and Formula (1-1), when $R^1$ and $R^2$ are each a hydrocarbon group containing a heteroatom, examples of heteroatoms include a nitrogen atom, an oxygen atom, and a sulfur atom. The number of heteroatoms is preferably 1 to 5, and more preferably 1 or 2.

In Formula (1) and Formula (1-1), the "hydrocarbon group containing a heteroatom" for $R^1$ and $R^2$ refers to a hydrocarbon group formed by replacing (i) the bond between two adjacent carbon atoms and/or (ii) the hydrogen atom of one $-CH_2-$(methylene group) and the hydrogen atom of another $-CH_2-$(methylene group) in a hydrocarbon group containing no heteroatom with a structure such as -O-, -N<, -NH-, -S-, -C(=O)-O-, -C(=O)-, =N-, -C(=O)-N<, -C(=O)-NH-, -O-C(=O)-O-, -O-C(=O)-N<, -O-C(=O)-NH-, -C(=O)-N[-C(=O)-]-, -C(=O)-NH-C(=O)-, >N-C(=O)-N<, >N-C(=O)-NH-, -HN-C(=O)-NH-, -S(=O)-, $-S(=O)_2-$, $-S(=O)_2-O-$, $-O-S(=O)_2-O-$, >N-C(=S)-N<, >N-C(=S)-NH-, -HN-C(=S)-NH-, -C(=N-)-, or -C(=NH)-. The number and combination of replacements by these structures are not particularly limited; however, the number of heteroatoms in $R^1$ and $R^2$ is preferably 1 to 5, and more preferably 1 or 2.

Preferably, the hydrocarbon group containing a heteroatom is a hydrocarbon group formed by replacing (i) the bond between two adjacent carbon atoms and/or (ii) the hydrogen atom of one $-CH_2-$ (methylene group) and the hydrogen atom of another $-CH_2-$ (methylene group) in a hydrocarbon group with -O- or -S-, and more preferably with -O-.

In the present invention, the structure in which (i) the bond between two adjacent carbon atoms and/or (ii) the hydrogen atom of one $-CH_2-$ (methylene group) and the hydrogen atom of another $-CH_2-$ (methylene group) in a hydrocarbon group are replaced with -O- or -S- may be not only the -O- structure (ether structure) or the -S- structure (thioether structure), but also an epoxy structure or a thioepoxy structure, such as an epoxy group, a thioepoxy group, a glycidyl ether group, or an epoxycyclohexyl group. In this case, $R^1$ and $R^2$ may be, for example, an epoxy group or a thioepoxy group.

When $R^1$ and $R^2$ contain two or more structures of -O- and/or -S-, the number of carbon atoms between the structures of -O- and/or -S- is preferably two or more.

In Formula (1) and Formula (1-1), examples of the "hydrocarbon group containing a heteroatom" for $R^1$ and $R^2$ include a linear or branched alkyl group containing a heteroatom, a linear or branched alkenyl group containing a heteroatom, a linear or branched alkynyl group containing a heteroatom, an optionally branched cycloalkyl group containing a heteroatom, an optionally branched cycloalkenyl group containing a heteroatom, an optionally branched aryl group containing a heteroatom, and an optionally branched aralkyl group containing a heteroatom.

Preferred are a linear or branched alkyl group containing a heteroatom, a linear or branched alkenyl group containing a heteroatom, and an optionally branched cycloalkyl group containing a heteroatom.

The "linear or branched alkyl group containing a heteroatom" is preferably a linear or branched $C_1$-$C_{12}$ alkyl group containing 1 to 5 heteroatoms.

In another embodiment, the linear or branched alkyl group containing a heteroatom is preferably a linear or branched $C_1$-$C_{12}$ alkyl group containing 1 or 2 heteroatoms, more preferably a linear or branched $C_1$-$C_8$ alkyl group containing 1 or 2 heteroatoms, and even more preferably a linear or branched $C_1$-$C_4$ alkyl group containing 1 or 2 heteroatoms.

The "linear or branched alkenyl group containing a heteroatom" is preferably a linear or branched $C_2$-$C_{12}$ alkenyl group containing 1 to 5 heteroatoms.

In another embodiment, the linear or branched alkenyl group containing a heteroatom is preferably a linear or branched $C_2$-$C_{12}$ alkenyl group containing 1 or 2 heteroatoms, more preferably a linear or branched $C_2$-$C_8$ alkenyl group containing 1 or 2 heteroatoms, and even more preferably a linear or branched $C_2$-$C_4$ alkenyl group containing 1 or 2 heteroatoms.

The "optionally branched cycloalkyl group containing a heteroatom" is preferably an optionally branched $C_3$-$C_{12}$ cycloalkyl group containing 1 to 5 heteroatoms.

In another embodiment, the optionally branched cycloalkyl group containing a heteroatom is preferably an optionally branched $C_3$-$C_{12}$ cycloalkyl group containing 1 or 2 heteroatoms, more preferably an optionally branched $C_3$-$C_8$ cycloalkyl group containing 1 or 2 heteroatoms, and even more preferably an optionally branched $C_3$-$C_4$ cycloalkyl group containing 1 or 2 heteroatoms.

In Formula (1) and Formula (1-1), specific examples of the "hydrocarbon group containing a heteroatom" for $R^1$ and $R^2$ include, but are not limited to, 2-methoxyethyl, 2-ethoxyethyl, 2-propoxyethyl, 2-isopropoxyethyl, 2-phenoxyethyl, 2-(benzyloxy)ethyl, 2-(p-methoxybenzyloxy)ethyl, 2-(2-methoxyethoxymethoxy)ethyl, 2-(2-benzyloxyethoxy)ethyl, 2-(dimethylamino)ethyl, 3-methoxypropyl, 3-ethoxypropyl, 3-propoxypropyl, 3-allyloxypropyl, 3-isopropoxypropyl, 3-(1-methylpropoxy)propyl, 3-(2-methylpropoxy)propyl, 3-(1,1-dimethylethoxy)propyl, 3-butoxypropyl, 3-pentyloxypropyl, 3-neopentyloxypropyl, 3-hexyloxypropyl, 3-cyclohexyloxypropyl, 3-heptyloxypropyl, 3-octyloxypropyl, 3-nonyloxypropyl, 3-(2-ethylhexan-1-yl)oxypropyl, 3-(2,4,6-trimethylphenoxy)propyl, 3-(2-methoxyethoxy)propyl, 3-(dimethylamino)propyl, 4-methoxybutyl, 4-ethoxybutyl, 4-propoxybutyl, 4-isopropoxybutyl, 4-allyloxybutyl, 4-butoxybutyl, 4-(1-methylpropoxy)butyl, 4-(2-methylpropoxy)butyl, 4-(1,1-dimethylethoxy)butyl, 4-pentyloxybutyl, 4-neopentyloxybutyl, 4-hexyloxybutyl, 4-cyclohexyloxybutyl, 4-heptyloxybutyl, 4-octyloxybutyl, 4-(2-ethylhexan-1-yl)oxybutyl, 5-methoxypentyl, 5-ethoxypentyl, 5-propoxypentyl, 5-isopropoxypentyl, 5-allyloxypentyl, 5-butoxypentyl, 5-(1-methylpropoxy)pentyl, 5-(2-methylpropoxy)pentyl, 5-(1,1-dimethylethoxy)pentyl, 5-pentyloxypentyl, 5-neopentyloxypentyl, 5-hexyloxypentyl, 5-cyclohexyloxypentyl, 5-heptyloxypentyl, 6-methoxyhexyl, 6-ethoxyhexyl, 6-propoxyhexyl, 6-isopropoxyhexyl, 6-allyloxyhexyl, 6-butoxyhexyl, 6-(1-methylpropoxy)hexyl, 6-(2-methylpropoxy)hexyl, 6-(1,1-dimethylethoxy)hexyl, 6-pentyloxyhexyl, 6-neopentyloxyhexyl, 6-hexyloxyhexyl, 6-cyclohexyloxyhexyl, (2-methoxycyclohexan-1-yl)methyl, (2-ethoxycyclohexan-1-yl)methyl, (2-propoxycyclohexan-1-yl)methyl, (2-isopropoxycyclohexan-1-yl)methyl, (2-butoxycyclohexan-1-yl)methyl, [2-(1-methylpropoxy)cyclohexan-1-yl]methyl, [2-(2-methylpropoxy)cyclohexan-1-yl]methyl, [2-(1,1-dimethylethoxy)cyclohexan-1-yl]methyl, (2-pentyloxycyclohexan-1-yl)methyl, (2-neopentyloxycyclohexan-1-yl)methyl, 2-methylthioethyl, 3-methylthiopropyl, 1-(methoxymethyl)propyl, (oxolan-2-yl)methyl, (furan-2-yl)methyl, 2-[(furan-2-yl)methylthio]ethyl, 2-(methylsulfonyl)ethyl, (thiophen-2-yl)methyl, p-methoxyphenyl, p-ethoxyphenyl, 3,4-methylenedioxyphenyl, 3,4-methylenedioxybenzyl, and (7-oxabicyclo[2,2,1]heptan-2-yl)methyl. Preferred are 2-methoxyethyl, 3-methoxypropyl, 3-ethoxypropyl, 3-isopropoxypropyl, 3-butoxypropyl, 3-(2-methoxyethoxy)propyl, 3-methylthiopropyl, and 3-(dimethylamino)propyl, and more preferred are 2-methoxyethyl, 3-methoxypropyl, and 3-(2-methoxyethoxy)propyl.

In Formula (1) and Formula (1-1), $R^3$ is a hydrogen atom or a $C_1$-$C_5$ hydrocarbon group. The number of carbon atoms in the hydrocarbon group is preferably 1 to 3. The hydrocarbon group may be linear and may contain a branched and/or cyclic structure, a double bond, and/or a triple bond.

In Formula (1) and Formula (1-1), examples of the "$C_1$-$C_5$ hydrocarbon group" for $R^3$ include, but are not particularly limited to, an alkyl group, an alkenyl group, an alkynyl group, and a cycloalkyl group.

The alkyl group is preferably a linear or branched $C_1$-$C_5$ alkyl group, and more preferably a linear or branched $C_1$-$C_3$ alkyl group.

The alkenyl group is preferably a linear or branched $C_2$-$C_5$ alkenyl group, and more preferably a linear or branched $C_2$-$C_3$ alkenyl group.

The cycloalkyl group is preferably an optionally branched $C_3$-$C_5$ cycloalkyl group, and more preferably a $C_3$

cycloalkyl group.

In Formula (1) and Formula (1-1), specific examples of the "$C_1$-$C_5$ hydrocarbon group" for $R^3$ include a methyl group, an ethyl group, a propyl group, an isopropyl group, a butyl group, a sec-butyl group, a isobutyl group, a tert-butyl group, a pentyl group, a neopentyl group, a vinyl group, an ethynyl group, a propenyl group, and an isopropenyl group. Preferred are a methyl group, an ethyl group, a propyl group, an isopropyl group, a butyl group, a sec-butyl group, a isobutyl group, a tert-butyl group, a pentyl group, and a neopentyl group, and more preferred are a methyl group, an ethyl group, a propyl group, an isopropyl group, and a tert-butyl group.

In Formula (1-1), specific examples of the imidazolium cation having a hydrocarbon group containing no heteroatom include 1,3-dimethylimidazolium, 1,3-diethylimidazolium, 1-ethyl-3-methylimidazolium, 1-methyl-3-propylimidazolium, 1-butyl-3-methylimidazolium, 1-methyl-3-pentylimidazolium, 1-hexyl-3-methylimidazolium, 1-heptyl-3-methylimidazolium, 1-methyl-3-octylimidazolium, 1-methyl-3-nonylimidazolium, 1-decyl-3-methylimidazolium, 1,3-diallylimidazolium, 1-allyl-3-methylimidazolium, and 1-allyl-3-ethylimidazolium. The imidazolium cation having a hydrocarbon group containing no heteroatom is preferably 1,3-dimethylimidazolium, 1-ethyl-3-methylimidazolium, 1,3-diethylimidazolium, and 1-butyl-3-methylimidazolium, although the present invention is not limited by these compounds.

In Formula (1-1), specific examples of the imidazolium cation having a hydrocarbon group containing a heteroatom include include 1,3-bis(2-methoxyethyl)imidazolium, 1,3-bis(2-ethoxyethyl)imidazolium, 1,3-bis(2-propoxyethyl)imidazolium, 1,3-bis(2-isopropoxyethyl)imidazolium, 1,3-bis(2-phenoxyethyl)imidazolium, 1,3-bis(2-benzyloxyethyl)imidazolium, 1,3-bis[2-(p-methoxybenzyloxy)ethyl]imidazolium, 1,3-bis[2-(2-methoxyethoxymethoxy)ethyl]imidazolium, 1,3-bis[2-(2-benzyloxyethoxy)ethyl]imidazolium, 1,3-bis(3-methoxypropyl)imidazolium, 1,3-bis(3-ethoxypropyl)imidazolium, 1,3-bis(3-propoxypropyl)imidazolium, 1,3-bis(3-isopropoxypropyl)imidazolium, 1,3-bis(3-allyloxypropyl)imidazolium, 1,3-bis(3-butoxypropyl)imidazolium, 1,3-bis[3-(1-methylpropoxy)propyl]imidazolium, 1,3-bis[3-(2-methylpropoxy)propyl]imidazolium, 1,3-bis[3-(1,1-dimethylethoxy)propyl]imidazolium, 1,3-bis[(oxolan-2-yl)methyl]imidazolium, 1,3-bis(3-pentyloxypropyl)imidazolium, 1,3-bis(3-neopentyloxypropyl)imidazolium, 1,3-bis(3-hexyloxypropyl)imidazolium, 1,3-bis(3-cyclohexyloxypropyl)imidazolium, 1,3-bis(3-heptyloxypropyl)imidazolium, 1,3-bis(3-octyloxypropyl)imidazolium, 1,3-bis(3-nonyloxypropyl)imidazolium, 1,3-bis(3-[(2-ethylhexan-1-yl)oxy]propyl}imidazolium, 1,3-bis[3-(2,4,6-trimethylphenoxy)propyl]imidazolium, 1,3-bis[3-(2-methoxyethoxy)propyl]imidazolium, 1,3-bis[2-(dimethylamino)ethyl]imidazolium, 1,3-bis[3-(dimethylamino)propyl]imidazolium, 1,3-bis(2-methylthioethyl)imidazolium, 1,3-bis(2-[(furan-2-yl)methylthio]ethyl]imidazolium, 1,3-bis[2-(furan-2-yl)methyl]imidazolium, 1,3-bis[1-(methoxymethyl)propyl]imidazolium, 1,3-bis(4-methoxybutyl)imidazolium, 1,3-bis(4-ethoxybutyl)imidazolium, 1,3-bis(4-propoxybutyl)imidazolium, 1,3-bis(4-isopropoxybutyl)imidazolium, 1,3-bis(4-allyloxybutyl)imidazolium, 1,3-bis(4-butoxybutyl)imidazolium, 1,3-bis[4-(1-methylpropoxy)butyl]imidazolium, 1,3-bis[4-(2-methylpropoxy)butyl]imidazolium, 1,3-bis[4-(1,1-dimethylethoxy)butyl]imidazolium, 1,3-bis(4-pentyloxybutyl)imidazolium, 1,3-bis(4-neopentyloxybutyl)imidazolium, 1,3-bis(4-hexyloxybutyl)imidazolium, 1,3-bis(4-cyclohexyloxybutyl)imidazolium, 1,3-bis(4-heptyloxybutyl)imidazolium, 1,3-bis(4-octyloxybutyl)imidazolium, 1,3-bis(4-[(2-ethylhexan-1-yl)oxy]butyl}imidazolium, 1,3-bis(5-methoxypentyl)imidazolium, 1,3-bis(5-ethoxypentyl)imidazolium, 1,3-bis(5-propoxypentyl)imidazolium, 1,3-bis(5-isopropoxypentyl)imidazolium, 1,3-bis(5-allyloxypentyl)imidazolium, 1,3-bis(5-butoxypentyl)imidazolium, 1,3-bis[5-(1-methylpropoxy)pentyl]imidazolium, 1,3-bis[5-(2-methylpropoxy)pentyl]imidazolium, 1,3-bis[5-(1,1-dimethylethoxy)pentyl]imidazolium, 1,3-bis(5-pentyloxypentyl)imidazolium, 1,3-bis(5-neopentyloxypentyl)imidazolium, 1,3-bis(5-hexyloxypentyl)imidazolium, 1,3-bis(5-cyclohexyloxypentyl)imidazolium, 1,3-bis(5-heptyloxypentyl)imidazolium, 1,3-bis(6-methoxyhexyl)imidazolium, 1,3-bis(6-ethoxyhexyl)imidazolium, 1,3-bis(6-propoxyhexyl)imidazolium, 1,3-bis(6-isopropoxyhexyl)imidazolium, 1,3-bis(6-allyloxyhexyl)imidazolium, 1,3-bis(6-butoxyhexyl)imidazolium, 1,3-bis[6-(1-methylpropoxy)hexyl]imidazolium, 1,3-bis[6-(2-methylpropoxy)hexyl]imidazolium, 1,3-bis[6-(1,1-dimethylethoxy)hexyl]imidazolium, 1,3-bis(6-pentyloxyhexyl)imidazolium, 1,3-bis(6-neopentyloxyhexyl)imidazolium, 1,3-bis(6-hexyloxyhexyl)imidazolium, 1,3-bis(6-cyclohexyloxyhexyl)imidazolium, 1,3-bis[(2-methoxycyclohexan-1-yl)methyl]imidazolium, 1,3-bis[(2-ethoxycyclohexan-1-yl)methyl]imidazolium, 1,3-bis[(2-propoxycyclohexan-1-yl)methyl]imidazolium, 1,3-bis[(2-isopropoxycyclohexan-1-yl)methyl]imidazolium, 1,3-bis[(2-butoxycyclohexan-1-yl)methyl]imidazolium, 1,3-bis{[2-(1-methylpropoxy)cyclohexan-1-yl]methyl}imidazolium, 1,3-bis{[2-(2-methylpropoxy)cyclohexan-1-yl]methyl}imidazolium, 1,3-bis{[2-(1,1-dimethylethoxy)cyclohexan-1-yl]methyl}imidazolium, 1,3-bis[(2-pentyloxycyclohexan-1-yl)methyl]imidazolium, 1,3-bis[(2-neopentyloxycyclohexan-1-yl)methyl]imidazolium, 1,3-bis(3-methylthiopropyl)imidazolium, 1,3-bis[2-(methylsulfonyl)ethyl]imidazolium, 1,3-bis[(thiophen-2-yl)methyl]imidazolium, 1,3-bis(p-methoxyphenyl)imidazolium, 1,3-bis(p-ethoxyphenyl)imidazolium, 1,3-bis(3,4-methylenedioxyphenyl)imidazolium, 1,3-bis(3,4-methylenedioxybenzyl)imidazolium, 1,3-bis{(7-oxabicyclo[2,2,1]heptan-2-yl)methyl}imidazolium, 1-methoxypropyl-3-methylthiopropyl imidazolium, 1,3-bis(3-methoxypropyl)-2-methylimidazolium, and 1,3-bis(2-methoxyethyl)-2-methylimidazolium. The imidazolium cation having a hydrocarbon group containing a heteroatom is preferably 1,3-bis(3-methoxypropyl)imidazolium, 1,3-bis(3-ethoxypropyl)imidazolium, 1,3-bis(3-propoxypropyl)imidazolium, 1,3-bis(3-isopropoxypropyl)imidazolium, 1,3-bis(3-allyloxypropyl)imidazolium, 1,3-bis(3-butoxypropyl)imidazolium, 1,3-bis[3-(1-methylpropoxy)propyl]imidazolium, 1,3-bis[3-(2-methylpropoxy)propyl]imidazolium, 1,3-bis[3-(1,1-dimethylethoxy)propyl]imidazolium, 1,3-bis[(oxolan-2-yl)methyl]imidazolium, 1,3-bis[3-(2-methoxyethoxy)propyl]imidazolium, 1,3-bis(3-methylthiopropyl)imidazolium, 1-methoxypropyl-3-methylthiopropyl imidazolium, 1,3-bis(3-methoxypropyl)-2-methylimidazolium, or 1,3-bis(2-methoxyethyl)-2-methylimidazolium, more preferably 1,3-bis(3-methoxypropyl)imidazolium, 1,3-bis(3-ethoxypropyl)imidazolium, 1-methoxypropyl-3-methylthiopropyl imidazolium, 1,3-bis[3-(2-methoxyethoxy)propyl]imidazolium, 1,3-bis(2-methoxyethyl)-2-methylimidazolium, or 1,3-bis(3-methoxypropyl)-2-methylimidazolium, although the present invention is not limited by these compounds.

The carboxylate anion represented by the following Formula (1-2) in Formula (1) is explained below.

Formula (1-2):

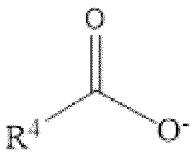

(1-2)

In Formula (1) and Formula (1-2), $R^4$ represents a $C_1$-$C_{12}$ hydrocarbon group and may contain a heteroatom, a double bond, a branched structure, and/or a cyclic structure.

In Formula (1) and Formula (1-2), the number of carbon atoms in the "$C_1$-$C_{12}$ hydrocarbon group" for $R^4$ is preferably 1 to 8, and more preferably 1 to 3. The hydrocarbon may be linear and may contain a branched and/or cyclic structure and/or a double bond.

In Formula (1) and Formula (1-2), examples of the "$C_1$-$C_{12}$ hydrocarbon group" for $R^4$ include a linear or branched $C_1$-$C_{12}$ alkyl group, a linear or branched $C_2$-$C_{12}$ alkenyl group, a linear or branched $C_2$-$C_{12}$ alkynyl group, an optionally branched $C_3$-$C_{12}$ cycloalkyl group, an optionally branched $C_3$-$C_{12}$ cycloalkenyl group, an optionally branched $C_6$-$C_{12}$ aryl group, and an optionally branched $C_7$-$C_{12}$ aralkyl group.

Preferred are a linear or branched $C_1$-$C_{12}$ alkyl group, a linear or branched $C_2$-$C_{12}$ alkenyl group, and an optionally branched $C_3$-$C_{12}$ cycloalkyl group.

In Formula (1) and Formula (1-1), the "linear or branched $C_1$-$C_{12}$ alkyl group" for $R^4$ is preferably a linear or branched $C_1$-$C_8$ alkyl group, more preferably a linear or branched $C_1$-$C_4$ alkyl group, and even more preferably a linear or branched $C_1$-$C_3$ alkyl group.

In Formula (1) and Formula (1-1), the "linear or branched $C_2$-$C_{12}$ alkenyl group" for $R^4$ is preferably a linear or branched $C_2$-$C_8$ alkenyl group, more preferably a linear or branched $C_2$-$C_4$ alkenyl group, and even more preferably a linear or branched $C_2$-$C_3$ alkenyl group.

In Formula (1) and Formula (1-1), the "optionally branched $C_3$-$C_{12}$ cycloalkyl group" for $R^4$ is preferably an optionally branched $C_3$-$C_8$ cycloalkyl group, more preferably an optionally branched $C_3$-$C_4$ cycloalkyl group, and even more preferably a $C_3$ cycloalkyl group.

In Formula (1) and Formula (1-2), specific examples of the "$C_1$-$C_{12}$ hydrocarbon group" for $R^4$ include a methyl group, an ethyl group, a propyl group, an isopropyl group, a butyl group, a sec-butyl group, an isobutyl group, a tert-butyl group, a pentyl group, a neopentyl group, a hexyl group, an octyl group, a 2-ethylhexyl group, a decyl group, a dodecyl group, a vinyl group, an ethynyl group, a propenyl group, an isopropenyl group, an allyl group, a propargyl group, a butenyl group, a crotyl group, a butadienyl group, a cyclopropyl group, a cyclobutyl group, a cyclopentyl group, a cyclohexyl group, a norbornyl group, an adamantyl group, a phenyl group, a benzyl group, a tolyl group, a styryl group, and a 2,4,6-trimethylphenyl group. The $C_1$-$C_{12}$ hydrocarbon group is preferably a methyl group, an ethyl group, a propyl group, an isopropyl group, a butyl group, a sec-butyl group, an isobutyl group, a tert-butyl group, a pentyl group, a neopentyl group, and a hexyl group, and more preferably a methyl group, an ethyl group, a propyl group, an isopropyl group, and a tert-butyl group.

An embodiment in which $R^4$ in Formula (1) and Formula (1-1) represents a hydrocarbon group containing a heteroatom is explained below.

In Formula (1) and Formula (1-2), when $R^4$ is a hydrocarbon group containing a heteroatom, the hydrocarbon group may be linear and may contain a branched and/or cyclic structure and/or a double bond.

In Formula (1) and Formula (1-2), when $R^4$ is a hydrocarbon group containing a heteroatom, the number of carbon atoms is preferably 2 to 12, more preferably 2 to 8, and even more preferably 2 to 4.

In Formula (1) and Formula (1-2), when $R^4$ is a hydrocarbon group containing a heteroatom, the number of heteroatoms is preferably 1 to 5, and more preferably 1 to 2. Examples of heteroatoms include a nitrogen atom, an oxygen atom, and a sulfur atom.

In Formula (1) and Formula (1-2), the "hydrocarbon group containing a heteroatom" for $R^4$ refers to a hydrocarbon group formed by replacing (i) the bond between two adjacent carbon atoms and/or (ii) the hydrogen atom of one $-CH_2-$ (methylene group) and the hydrogen atom of another $-CH_2-$ (methylene group) in a hydrocarbon group containing no heteroatom with a structure such as -O-, -N<, -NH-, -S-, -C(=O)-O-, -C(=O)-, =N-, -C(=O)-N<, -C(=O)-NH-,

-O-C(=O)-O-, -O-C(=O)-N<, -O-C(=O)-NH-, -C(=O)-N[-C(=O)-]-, -C(=O)-NH-C(=O)-, >N-C(=O)-N<, >N-C(=O)-NH-, -HN-C(=O)-NH-, -S(=O)-, $-S(=O)_2-$, $-S(=O)_2-O-$, $-O-S(=O)_2-O-$, >N-C(=S)-N<, >N-C(=S)-NH-, -HN-C(=S)-NH-, -C(=N-)-, or -C(=NH)-. The number and combination of replacements by these structures are not particularly limited.

Preferably, the hydrocarbon group containing a heteroatom is a hydrocarbon group formed by replacing (i) the bond between two adjacent carbon atoms and/or (ii) the hydrogen atom of one $-CH_2-$ (methylene group) and the hydrogen atom of another $-CH_2-$ (methylene group) in a hydrocarbon group with -O- or -S-, and more preferably with -O-.

In $R^4$ in Formula (1) and Formula (1-2), the structure in which (i) the bond between two adjacent carbon atoms and/or (ii) the hydrogen atom of one $-CH_2-$ (methylene group) and the hydrogen atom of another $-CH_2-$ (methylene group) in a hydrocarbon group are replaced with -O- or -S- may be not only the -O-structure (ether structure) or the -S- structure (thioether structure), but also an epoxy structure or a thioepoxy structure, such as an epoxy group, a thioepoxy group, a glycidyl ether group, or an epoxycyclohexyl group.

In Formula (1) and Formula (1-2), when $R^4$ contains two or more structures of -O- and/or -S-, the number of carbon atoms between the structures of -O- and/or -S- is preferably two or more.

In Formula (1) and Formula (1-2), examples of the "hydrocarbon group containing a heteroatom" for $R^4$ include a linear or branched alkyl group containing a heteroatom, a linear or branched alkenyl group containing a heteroatom, a linear or branched alkynyl group containing a heteroatom, an optionally branched cycloalkyl group containing a heteroatom, an optionally branched cycloalkenyl group containing a heteroatom, an optionally branched aryl group containing a heteroatom, and an optionally branched aralkyl group containing a heteroatom.

Preferred are a linear or branched alkyl group containing a heteroatom, a linear or branched alkenyl group containing a heteroatom, and an optionally branched cycloalkyl group containing a heteroatom.

The "linear or branched alkyl group containing a heteroatom" is preferably a linear or branched $C_1$-$C_{12}$ alkyl group containing 1 to 5 heteroatoms.

In another embodiment, the linear or branched alkyl group containing a heteroatom is preferably a linear or branched $C_1$-$C_{12}$ alkyl group containing 1 or 2 heteroatoms, more preferably a linear or branched $C_1$-$C_8$ alkyl group containing 1 or 2 heteroatoms, and even more preferably a linear or branched $C_1$-$C_4$ alkyl group containing 1 or 2 heteroatoms.

The "linear or branched alkenyl group containing a heteroatom" is preferably a linear or branched $C_2$-$C_{12}$ alkenyl group containing 1 to 5 heteroatoms.

In another embodiment, the linear or branched alkenyl group containing a heteroatom is preferably a linear or branched $C_2$-$C_{12}$ alkenyl group containing 1 or 2 heteroatoms, more preferably a linear or branched $C_2$-$C_8$ alkenyl group containing 1 or 2 heteroatoms, and even more preferably a linear or branched $C_2$-$C_4$ alkenyl group containing 1 or 2 heteroatoms.

The "optionally branched cycloalkyl group containing a heteroatom" is preferably an optionally branched $C_3$-$C_{12}$ cycloalkyl group containing 1 to 5 heteroatoms.

In another embodiment, the optionally branched cycloalkyl group containing a heteroatom is preferably an optionally branched $C_3$-$C_{12}$ cycloalkyl group containing 1 or 2 heteroatoms, more preferably an optionally branched $C_3$-$C_8$ cycloalkyl group containing 1 or 2 heteroatoms, and even more preferably an optionally branched $C_3$-$C_4$ cycloalkyl group containing 1 or 2 heteroatoms.

In Formula (1) and Formula (1-2), the "hydrocarbon group containing a heteroatom" for $R^4$ is preferably a methoxymethyl group, a methoxyethyl group, an ethoxymethyl group, a propoxy group, or a 2-methoxyethoxy group, and more preferably a methoxymethyl group, a methoxyethyl group, or a 2-methoxyethoxy group, although the present invention is not limited by these groups.

In Formula (1) and Formula (1-2), $R^4$ is preferably a methyl group, an ethyl group, a methoxymethyl group, or a methoxyethyl group.

Specific examples of the carboxylate anion represented by Formula (1-2) include an acetate ion, a propionate ion, an acrylate ion, propargylate ion, a butyrate ion, an isobutyrate ion, a methacrylate ion, a crotonate ion, a tetrolate ion, a cyclopropanecarboxylate ion, a valerate ion, an isovalerate ion, a pivalate ion, an angelicate ion, a tiglate ion, a cyclobutanecarboxylate ion, a caproate ion, a cyclopentanecarboxylate ion, an enanthate ion, a sorbate ion, a cyclohexanecarboxylate ion, a benzoate ion, a caprylate ion, a 2-ethylhexylcarboxylate ion, a toluate ion, a 2-norbornane carboxylate ion, a pelargonate ion, a cinnamate ion, a caprate ion, an adamantanecarboxylate ion, a geranate ion, an undecylate ion, a laurate ion, and a naphthalenecarboxylate ion. The carboxylate anion is preferably an acetate ion, a propionate ion, an acrylate ion, a propargylate ion, a butyrate ion, a isobutyrate ion, a methacrylate ion, a crotonate ion, a tetrolate ion, a valerate ion, an isovalerate ion, a pivalate ion, a methoxyacetate ion, an ethoxyacetate ion, a propoxyacetate ion, a (2-methoxyethoxy)acetate ion, a (2-ethoxyethoxy)acetate ion, a (2-propoxyethoxy)acetate ion, a 3-(2-methoxyethoxy)propanoate ion, a 3-(2-ethoxyethoxy)propanoate ion, a 3-(2-propoxyethoxy)propanoate ion, a 3-(3-methoxypropoxy)propanoate ion, a 3-(3-ethoxypropoxy)propanoate ion, a 3-(3-propoxypropoxy)propanoate ion, a 3-[2-(2-methoxyethoxy)ethoxy]propanoate ion, a 3-[2-(2-ethoxyethoxy)ethoxy]propanoate ion, a 4,7,10,13-tetraoxatetradecanoate ion, a 4,7,10,13-tetraoxapentadecanoate ion, a 4,7,10,13,16-pentaoxaheptadecanoate ion, a

4,7,10,13,16-pentaoxaoctadecanoate ion, a (methylthio)acetate ion, an (ethylthio)acetate ion, a 3-(methylthio)propanoate ion, a 3-[(2-methoxyethyl)thio]propanoate ion, or a 3-[(2-ethoxyethyl)thio]propanoate ion, and particularly preferably an acetate ion, a methoxyacetate ion, an acrylate ion, or a methacrylate ion, although the present invention is not limited by these ions.

The imidazolium carboxylate represented by Formula (1) is preferably an onium salt formed of a combination of one cation selected from the group consisting of 1,3-bis(2-methoxyethyl)imidazolium, 1,3-bis(3-methoxypropyl)imidazolium, 1,3-bis(3-ethoxypropyl)imidazolium, 1,3-bis(3-methylthiopropyl)imidazolium, 1,3-bis[3-(2-methoxyethoxy)propyl]imidazolium, 1-methoxypropyl-3-methylthiopropylimidazolium, 1,3-bis(2-methoxyethyl)-2-methylimidazolium, and 1,3-bis(3-methoxypropyl)-2-methylimidazolium with one anion selected from the group consisting of an acetate ion, a methoxyacetate ion, an acrylate ion, and a methacrylate ion.

More specifically, the onium salt represented by Formula (1) includes 1,3-bis(2-methoxyethyl)imidazolium acetate, 1,3-bis(3-methoxypropyl)imidazolium acetate, 1,3-bis(3-methoxypropyl)imidazolium acrylate, 1,3-bis(3-methoxypropyl)imidazolium methacrylate, 1,3-bis(3-ethoxypropyl)imidazolium acetate, 1-methoxypropyl-3-methylthiopropyl imidazolium acetate, 1,3-bis(3-methylthiopropyl)imidazolium acetate, 1,3-bis(2-methoxyethyl)-2-methyl imidazolium acetate, 1,3-bis(2-methoxyethyl)-2-methyl imidazolium acrylate, 1,3-bis(2-methoxyethyl)-2-methyl imidazolium methacrylate, 1,3-bis(3-methoxypropyl)-2-methyl imidazolium acetate, 1,3-bis(3-methoxypropyl)-2-methyl imidazolium acrylate, 1,3-bis(3-methoxypropyl)-2-methyl imidazolium methacrylate, 1,3-bis[3-(2-methoxyethoxy)propyl]imidazolium acetate, 1,3-bis[3-(2-methoxyethoxy)propyl]imidazolium acrylate, and 1,3-bis[3-(2-methoxyethoxy)propyl]imidazolium methacrylate. The onium salt is preferably 1,3-bis(3-methoxypropyl)imidazolium acetate, 1,3-bis(3-methoxypropyl) imidazolium acrylate, or 1,3-bis(3-methoxypropyl)imidazolium methacrylate, although the present invention is not limited by these compounds.

The polysaccharides in the present invention are substances composed of a large number of monosaccharide molecules polymerized by glycosidic bonds. Examples of constituent monosaccharide molecules include glucose, fructose, glucosamine, and N-acetylglucosamine. Glucose-derived polysaccharides include glycogen, starch, cellulose, dextrin, and curdlan, fructose-derived polysaccharides include fructan, and glucosamine-derived polysaccharides include chitin and chitosan. In particular, poorly soluble cellulose, curdlan, chitin, chitosan, and the like are suitable for the present invention.

Cellulose refers to a polymer of glucose polymerized by β-1,4-glucosidic bonds and derivatives of the polymer. The degree of polymerization of glucose in cellulose is not particularly limited, but is preferably 200 or more. Examples of derivatives include carboxymethylation, aldehydation, and esterification derivatives. The cellulose may also contain cello-oligosaccharides and cellobiose, which are partial decomposition products of cellulose. Further, the cellulose may be a composite with β-glucoside (glycoside), lignocellulose, which is lignin and/or hemicellulose, or a composite with pectin or the like. The cellulose may be crystalline cellulose or non-crystalline cellulose, but is preferably crystalline cellulose. Further, the cellulose may be naturally derived or artificially synthesized. The origin of the cellulose is also not limited. The cellulose may be of plant, fungal, or bacterial origin.

The cellulose according to the present invention also includes cellulose-containing materials. Specific examples of the cellulose-containing materials include pulp, natural fibers such as cotton and hemp, recycled fibers such as rayon, cupra, and acetate, rice straw and other types of straw, agricultural wastes such as bagasse and wood chips, and biomass including waste paper, construction wastes, and other various wastes. When the pulp, natural fibers such as cotton and hemp, recycled fibers such as rayon, cupra, and acetate, rice straw and other types of straw, agricultural wastes such as bagasse and wood chips, and biomass including waste paper, construction wastes, and other various wastes mentioned above are dissolved in the onium salt of the present invention, it is preferable to use cut pieces of these materials in order to shorten the time required for dissolution.

The "esterification agent" used in step (2) of the production method of the present invention is explained below.

The "esterification agent" used in the present invention is an esterification agent represented by the following Formula (2) or (3).

Formula (2):

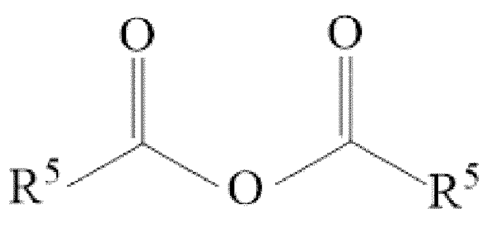

Formula (3):

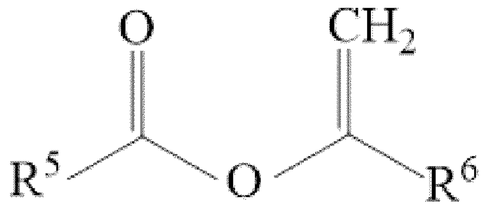

In Formula (2) or (3), $R^5$ is $C_1$-$C_{12}$ hydrocarbon group and may contain a heteroatom, a double bond, a branched structure, and/or a cyclic structure.

In Formula (2) or (3), the number of carbon atoms in the "$C_1$-$C_{12}$ hydrocarbon group" for $R^5$ is preferably 1 to 8, and more preferably 1 to 3. The hydrocarbon may be linear and may contain a branched and/or cyclic structure and/or a double bond.

In Formula (2) or (3), examples of the "$C_1$-$C_{12}$ hydrocarbon group" for $R^5$ include a linear or branched $C_1$-$C_{12}$ alkyl group, a linear or branched $C_2$-$C_{12}$ alkenyl group, a linear or branched $C_2$-$C_{12}$ alkynyl group, an optionally branched $C_3$-$C_{12}$ cycloalkyl group, an optionally branched $C_3$-$C_{12}$ cycloalkenyl group, an optionally branched $C_6$-$C_{12}$ aryl group, and an optionally branched $C_7$-$C_{12}$ aralkyl group.

Preferred are a linear or branched $C_1$-$C_{12}$ alkyl group, a linear or branched $C_2$-$C_{12}$ alkenyl group, and an optionally branched $C_3$-$C_{12}$ cycloalkyl group.

In Formula (2) or (3), the "linear or branched $C_1$-$C_{12}$ alkyl group" for $R^5$ is preferably a linear or branched $C_1$-$C_8$ alkyl group, more preferably a linear or branched $C_1$-$C_4$ alkyl group, and even more preferably a linear or branched $C_1$-$C_3$ alkyl group.

In Formula (2) or (3), the "linear or branched $C_2$-$C_{12}$ alkenyl group" for $R^5$ is preferably a linear or branched $C_2$-$C_8$ alkenyl group, more preferably a linear or branched $C_2$-$C_4$ alkenyl group, and even more preferably a linear or branched $C_2$-$C_3$ alkenyl group.

In Formula (2) or (3), the "optionally branched $C_3$-$C_{12}$ cycloalkyl group" for $R^5$ is preferably an optionally branched $C_3$-$C_8$ cycloalkyl group, more preferably an optionally branched $C_3$-$C_4$ cycloalkyl group, and even more preferably a $C_3$ cycloalkyl group.

In Formula (2) or (3), specific examples of the "$C_1$-$C_{12}$ hydrocarbon group" for $R^5$ include a methyl group, an ethyl group, a propyl group, an isopropyl group, a butyl group, a sec-butyl group, an isobutyl group, a tert-butyl group, a pentyl group, a neopentyl group, a hexyl group, an octyl group, a 2-ethylhexyl group, a decyl group, a dodecyl group, a vinyl group, an ethynyl group, a propenyl group, an isopropenyl group, an allyl group, a propargyl group, a butenyl group, a crotyl group, a butadienyl group, a cyclopropyl group, a cyclobutyl group, a cyclopentyl group, a cyclohexyl group, a norbornyl group, an adamantyl group, a phenyl group, a benzyl group, a tolyl group, a styryl group, and a 2,4,6-trimethylphenyl group. Preferred are a methyl group, an ethyl group, a propyl group, an isopropyl group, a butyl group, a sec-butyl group, an isobutyl group, a tert-butyl group, a pentyl group, a neopentyl group, and a hexyl group, and more preferred are a methyl group, an ethyl group, a propyl group, an isopropyl group, and a tert-butyl group.

An embodiment in which $R^5$ in Formula (2) or (3) is a hydrocarbon group containing a heteroatom is explained below.

In Formula (2) or (3), when $R^5$ is a "hydrocarbon group containing a heteroatom," the hydrocarbon group may be linear and may contain a branched and/or cyclic structure and/or a double bond.

In Formula (2) or (3), when $R^5$ is a hydrocarbon group containing a heteroatom, the number of carbon atoms is preferably 2 to 12, more preferably 2 to 8, and even more preferably 2 to 4.

In Formula (2) or (3), when $R^5$ is a hydrocarbon group containing a heteroatom, the number of heteroatoms is preferably 1 to 5, and more preferably 1 or 2. Examples of heteroatoms include a nitrogen atom, an oxygen atom, and a sulfur atom.

In Formula (2) or (3), the "hydrocarbon group containing a heteroatom" for $R^5$ refers to a hydrocarbon group formed by replacing (i) the bond between two adjacent carbon atoms and/or (ii) the hydrogen atom of one $-CH_2-$ (methylene group) and the hydrogen atom of another $-CH_2-$ (methylene group) in a hydrocarbon group containing no heteroatom with a structure such as -O-, -N<, -NH-, -S-, -C(=O)-O-, -C(=O)-, =N-, -C(=O)-N<, - C(=O)-NH-, -O-C(=O)-O-, -O-C(=O)-N<, -O-C(=O)-NH-, -C(=O)-N[-C(=O)-]-, -C(=O)-NH-C(=O)-, >N-C(=O)-N<, >N-C(=O)-NH-, -HN-C(=O)-NH-, -S(=O)-, $-S(=O)_2-$, $-S(=O)_2-O-$, $-O-S(=O)_2-O-$, >N-C(=S)-N<, >N-C(=S)-NH-, -HN-C(=S)-NH-, -C(=N-)-, or -C(=NH)-. The number and combination of replacements by these structures are not particularly limited.

Preferably, the hydrocarbon group containing a heteroatom is a hydrocarbon group formed by replacing (i) the bond between two adjacent carbon atoms and/or (ii) the hydrogen atom of one $-CH_2-$ (methylene group) and the hydrogen atom of another $-CH_2-$ (methylene group) in a hydrocarbon group with -O- or -S-, and more preferably with -O-.

In $R^5$ in Formula (2) or Formula (3), the structure in which (i) the bond between two adjacent carbon atoms and/or (ii) the hydrogen atom of one $-CH_2-$ (methylene group) and the hydrogen atom of another $-CH_2-$ (methylene group) in a hydrocarbon group are replaced with -O- or -S- may be not only the -O- structure (ether structure) or the -S- structure (thioether structure), but also an epoxy structure or a thioepoxy structure, such as an epoxy group, a thioepoxy group, a glycidyl ether group, or an epoxycyclohexyl group.

In Formula (2) or Formula (3), when $R^5$ contains two or more structures of -O- and/or -S-, the number of carbon atoms between the structures of -O- and/or -S- is preferably two or more.

In Formula (2) or (3), examples of the "hydrocarbon group containing a heteroatom" for $R^5$ include a linear or branched alkyl group containing a heteroatom, a linear or branched alkenyl group containing a heteroatom, a linear or branched alkynyl group containing a heteroatom, an optionally branched cycloalkyl group containing a heteroatom, an optionally branched cycloalkenyl group containing a heteroatom, an optionally branched aryl group containing a heteroatom, and an optionally branched aralkyl group containing a heteroatom.

Preferred are a linear or branched alkyl group containing a heteroatom, a linear or branched alkenyl group containing a heteroatom, and an optionally branched cycloalkyl group containing a heteroatom.

The "linear or branched alkyl group containing a heteroatom" is preferably a linear or branched $C_1$-$C_{12}$ alkyl group containing 1 to 5 heteroatoms.

In another embodiment, the linear or branched alkyl group containing a heteroatom is preferably a linear or branched $C_1$-$C_{12}$ alkyl group containing 1 or 2 heteroatoms, more preferably a linear or branched $C_1$-$C_8$ alkyl group containing 1 or 2 heteroatoms, and even more preferably a linear or branched $C_1$-$C_4$ alkyl group containing 1 or 2 heteroatoms.

The "linear or branched alkenyl group containing a heteroatom" is preferably a linear or branched $C_2$-$C_{12}$ alkenyl group containing 1 to 5 heteroatoms.

In another embodiment, the linear or branched alkenyl group containing a heteroatom is preferably a linear or branched $C_2$-$C_{12}$ alkenyl group containing 1 or 2 heteroatoms, more preferably a linear or branched $C_2$-$C_8$ alkenyl group containing 1 or 2 heteroatoms, and even more preferably a linear or branched $C_2$-$C_4$ alkenyl group containing 1 or 2 heteroatoms.

The "optionally branched cycloalkyl group containing a heteroatom" is preferably an optionally branched $C_3$-$C_{12}$ cycloalkyl group containing 1 to 5 heteroatoms.

In another embodiment, the optionally branched cycloalkyl group containing a heteroatom is preferably an optionally branched $C_3$-$C_{12}$ cycloalkyl group containing 1 or 2 heteroatoms, more preferably an optionally branched $C_3$-$C_8$ cycloalkyl group containing 1 or 2 heteroatoms, and even more preferably an optionally branched $C_3$-$C_4$ cycloalkyl group containing 1 or 2 heteroatoms.

In Formula (2) or (3), the "hydrocarbon group containing a heteroatom" for $R^5$ is preferably a methoxymethyl group, a methoxyethyl group, an ethoxymethyl group, a propoxy group, or a 2-methoxyethoxy group, and more preferably a methoxymethyl group, a methoxyethyl group, or a 2-methoxyethoxy group, although the present invention is not limited by these groups.

In Formula (2) or (3), $R^5$ is preferably a methyl group, an ethyl group, a propyl group, an isopropyl group, a butyl group, an isobutyl group, a hexyl group, an octyl group, a dodecyl group, a tert-butyl group, a dodecyl group, an allyl group, a phenyl group, or a methoxymethyl group.

In Formula (2) or (3), $R^5$ is preferably the same as $R^4$ in Formula (1) and Formula (1-2).

In Formula (3), $R^6$ is a hydrogen atom or a methyl group.

More specific examples of the esterifying agent represented by Formula (2) or (3) include acetic anhydride, propionic anhydride, butyric anhydride, isobutyric anhydride, valeric anhydride, isovaleric anhydride, pivalic anhydride, hexanoic anhydride, heptanoic anhydride, octanoic anhydride, nonanoic anhydride, decanoic anhydride, lauric anhydride, cyclohexanoic anhydride, benzoic anhydride, 2-methylbenzoic anhydride, allyl anhydride, crotonic anhydride, methacrylic anhydride, methoxyacetic anhydride, phenoxyacetic anhydride, 4-methoxybenzoic anhydride, isopropenyl acetate, vinyl acetate, vinyl propionate, vinyl crotonate, vinyl butyrate, and vinyl pivalate. Preferred are acetic anhydride, propionic anhydride, butyric anhydride, isobutyric anhydride, valeric anhydride, isovaleric anhydride, pivalic anhydride, hexanoic anhydride, heptanoic anhydride, octanoic anhydride, benzoic anhydride, allyl anhydride, methoxyacetic anhydride, isopropenyl acetate, vinyl acetate, vinyl propionate, and vinyl butyrate. More preferred are acetic anhydride, propionic anhydride, butyric anhydride, isobutyric anhydride, valeric anhydride, isovaleric anhydride, pivalic anhydride, benzoic anhydride, isopropenyl acetate, vinyl acetate, and vinyl butyrate.

The solvent in which esterified polysaccharides are insoluble used in step (3) of the production method of the present invention is explained below.

The "solvent in which esterified polysaccharides are insoluble" used in step (3) is at least one solvent selected from water, alcohols, and ketones. Specific examples of alcohols include methanol, ethanol, propanol, and butanol. Specific examples of ketones include acetone and methyl ethyl ketone. These solvents may be used in combination.

The carboxylic acid represented by the following Formula (4) contained in the filtrate separated in step (4) of the

present invention is explained below.

Formula (4):

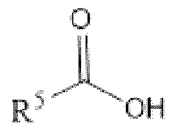

In Formula (4), $R^5$ is a $C_1$-$C_{12}$ hydrocarbon group and may contain a heteroatom, a double bond, a branched structure, and/or a cyclic structure. $R^5$ is the same as $R^5$ in Formula (2) or Formula (3) .

Specific examples of the carboxylic acid represented by Formula (4) include acetic acid, propionic acid, butyl acid, isobutyric acid, valeric acid, isovaleric acid, pivalic acid, hexanoic acid, heptanoic acid, octanoic acid, nonanoic acid, decanoic acid, lauric acid, cyclohexanoic acid, benzoic acid, 2-methylbenzoic acid, allyl acid, crotonic acid, methacrylic acid, methoxyacetic acid, phenoxyacetic acid, and 4-methoxybenzoic acid. Preferred are acetic acid, propionic acid, butyl acid, isobutyric acid, valeric acid, isovaleric acid, pivalic acid, hexanoic acid, heptanoic acid, octanoic acid, benzoic acid, allyl acid, and methoxyacetic acid. More preferred are acetic acid, propionic acid, butyl acid, isobutyric acid, valeric acid, isovaleric acid, pivalic acid, and benzoic acid.

The amine represented by the following Formula (5) used in step (6) of the production method of the present invention is explained below.

Formula (5):

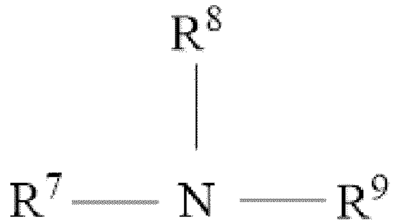

In Formula (5), $R^7$, $R^8$, and $R^9$ may be identical or different, and each represents a hydrogen atom or a $C_1$-$C_{18}$ hydrocarbon group, and may contain a double bond, a branched structure, and/or a cyclic structure. The total number of carbon atoms in $R^7$, $R^8$, and $R^9$ is 8 or more.

In $R^7$, $R^8$, and $R^9$ in Formula (5), the number of carbon atoms in the hydrocarbon group is 1 to 18, preferably 1 to 12, and more preferably 1 to 8.

The total number of carbon atoms in $R^7$, $R^8$, and $R^9$ is 8 or more, and preferably 12 or more and 24 or less.

Specific examples of the hydrocarbon group represented by $R^7$, $R^8$, or $R^9$ include a methyl group, an ethyl group, a propyl group, an isopropyl group, a butyl group, a sec-butyl group, an isobutyl group, a tert-butyl group, a pentyl group, a neopentyl group, a hexyl group, an octyl group, a 2-ethylhexyl group, a decyl group, a dodecyl group, and an octadecyl group. The isopropyl group, sec-butyl group, isobutyl group, tert-butyl group, neopentyl group, and 2-ethylhexyl group each have a branched structure.

Specific examples of the hydrocarbon group containing a double bond represented by $R^7$, $R^8$, or $R^9$ include a vinyl group, an ethynyl group, a propenyl group, an isopropenyl group, an allyl group, a propargyl group, a butenyl group, a crotyl group, a butadienyl group, and an oleyl group.

Specific examples of the hydrocarbon group having a cyclic structure represented by $R^7$, $R^8$, or $R^9$ include a cyclopropyl group, a cyclobutyl group, a cyclopentyl group, a cyclohexyl group, a norbornyl group, an adamantyl group, a phenyl group, a benzyl group, a tolyl group, a styryl group, and a 2,4,6-trimethylphenyl group. The cyclopropyl group, cyclobutyl group, cyclopentyl group, cyclohexyl group, norbornyl group, and adamantyl group each have a branched structure.

$R^7$, $R^8$, and $R^9$ are preferably a hydrogen atom, a methyl group, an oleyl group, a 2-ethylhexyl group, a cyclohexyl group, an octadecyl group, or an octyl group.

Specific examples of the amine represented by Formula (5) include tripropylamine, tributylamine, tripentylamine, trihexylamine, triheptylamine, trioctylamine, trinonylamine, tridecylamine, oleylamine, di-2-ethylhexylamine, dicyclohexylamine, methyloctadecylamine, dimethyloctadecylamine, and trioctylamine.

Steps (1) to (8) of the production method of the present invention are explained below.

Step (1) is a step of mixing an onium salt represented by Formula (1) with a polysaccharide to dissolve the polysaccharide in the onium salt.

In step (1), the concentration of the polysaccharide contained in the mixture of the onium salt and the polysaccharide is 5 to 40 wt%, and preferably 10 to 25 wt%, based on the total weight of the mixture of the onium salt and the polysaccharide taken as 100 wt%.

The temperature at which the polysaccharide is dissolved in the onium salt is 10 to 120°C, preferably 20 to 100°C, and more preferably 25 to 80°C.

In step (1), the mixture of the onium salt and the polysaccharide may be subjected to stirring, shaking, ultrasonic irradiation, or the like to promote dissolution of the polysaccharide.

Step (2) is a step of adding an esterification agent represented by Formula (2) or Formula (3) to a mixture obtained in step (1) to generate an esterified polysaccharide.

The amount of the esterification agent added to the mixture obtained in step (1) is 0.1 to 10 equivalents, preferably 1 to 3 equivalents, per glucose unit of the polysaccharide.

The temperature at which the esterification agent is added to the mixture obtained in step (1) is -10 to 100°C, and preferably 0 to 80°C.

The reaction between the polysaccharide and the esterification agent is usually carried out at -10 to 100°C, preferably 0 to 80°C, for 0.5 to 2 hours with stirring.

The degree of esterification of the esterified polysaccharide to be generated is not particularly limited and is preferably 1 to 3.

Step (3) is a step of adding a solvent in which esterified polysaccharides are insoluble to a mixture obtained in step (2) to precipitate the esterified polysaccharide.

The amount for use of the solvent in which esterified polysaccharides are insoluble is 1 to 100 times, and preferably 5 to 50 times, based on the total weight of the onium salt used in step (1). The temperature during precipitation is not particularly limited and is preferably 10 to 50°C.

Step (4) is a step of filtering the esterified polysaccharide precipitated in step (3) to separate the esterified polysaccharide from a filtrate containing the onium salt represented by Formula (1), the carboxylic acid represented by Formula (4), and the solvent in which esterified polysaccharides are insoluble.

The filtration method in step (4) is not particularly limited. The filtration may be performed under ordinary pressure or reduced pressure, and may be performed with heating.

The filtrate separated in step (4) may contain acetone or acetaldehyde, i.e., a decomposition product of the esterification agent represented by Formula (2) or Formula (3).

Step (5) is a step of heating and/or depressurizing the filtrate separated in step (4) to remove from the filtrate the solvent in which esterified polysaccharides are insoluble.

The method for removing the solvent in which esterified polysaccharides are insoluble from the filtrate separated in step (4) by heating and/or depressurization is not particularly limited.

When the solvent in which esterified polysaccharides are insoluble is removed by heating and/or depressurization, acetone or acetaldehyde, i.e., a decomposition product of the esterification agent represented by Formula (2) or Formula (3), may be removed at the same time.

Step (6) is a step of adding an amine represented by Formula (5) to the mixture containing the onium salt represented by Formula (1) and the carboxylic acid represented by Formula (4) obtained in step (5) to generate an amine-carboxylic acid salt, and separating an onium salt-containing layer from an amine-carboxylic acid salt-containing layer.

The amount of the amine added to the mixture containing the onium salt represented by Formula (1) and the carboxylic acid represented by Formula (4) is 1 equivalent or more, usually 1 to 1.5 equivalents, preferably 1 to 1.2 equivalents, and more preferably 1 to 1.1 equivalents, per equivalent of the carboxylic acid. An amine-carboxylic acid salt composed of the amine added and the carboxylic acid of Formula (4) is generated, and a mixture of the onium salt of Formula (1), the amine-carboxylic acid salt, and the remaining amine is obtained.

The reaction conditions for generating an amine-carboxylic acid salt by adding an amine to a mixture containing an onium salt represented by Formula (1) and a carboxylic acid represented by Formula (4) are as follows: the temperature is 0°C to 100°C, preferably 25°C to 80°C; in regards to the reaction time, after the amine is added, the mixture is preferably stirred for 0.5 hours to 3 hours, and more preferably 1 hour to 2 hours.

Step (7) is a step of recovering the onium salt-containing layer separated in step (6) as an onium salt-containing recovery liquid.

In step (7), the onium salt-containing layer separated in step (6) is recovered. The recovery method may be liquid separation or the like.

In step (7), a recovery liquid containing the onium salt represented by Formula (1) is obtained. Residual amine, which may be contained in the obtained recovery liquid, can be removed by heating and/or depressurizing the obtained recovery liquid.

Step (8) is a step of introducing the recovery liquid recovered in step (7) into step (1), and recycling the recovery liquid containing an onium salt represented by Formula (1) as the onium salt used in step (1).

Step (8) is a step of introducing the onium salt-containing recovery liquid obtained in step (7) into step (1), and the

method for this step is not particularly limited.

In a preferred embodiment of the present invention, in step (6) described above of the method for producing an esterified polysaccharide, water and/or a hydrophilic solvent is added to the mixture containing the onium salt represented by Formula (1) and the carboxylic acid represented by Formula (4) obtained in step (5).

The hydrophilic solvent refers to a solvent that can be dissolved in or is miscible with water, and specific examples include $C_1$-$C_4$ lower alcohols, such as methanol, ethanol, propanol, and ethylene glycol.

The content of water and/or the hydrophilic solvent is 0.1 wt% to 90 wt% or 1 wt% to 70 wt%, and preferably 5 wt% to 50 wt%, based on the total amount of the mixture containing the onium salt represented by formula (1), the carboxylic acid represented by Formula (4), and water and/or the hydrophilic solvent taken as 100 wt%.

In a preferred embodiment of the present invention, in step (6) described above of the method for producing an esterified polysaccharide, (i) an amine represented by Formula (5) is added, or (ii) an amine solution in which the amine is diluted with a hydrophobic solvent is added, to the mixture containing the onium salt represented by Formula (1) and the carboxylic acid represented by Formula (4) obtained in step (5).

In (ii) above, in which an amine solution in which the amine is diluted with a hydrophobic solvent is added, examples of the solvent for use include chloroform, dichloromethane, 2-ethylhexanol, cyclohexanol, 1-octanol, and ethyl acetate, among which chloroform, 2-ethylhexanol, cyclohexanol, and 1-octanol are preferred.

The concentration of the amine solution obtained by dilution with a hydrophobic solvent is usually 0.01 g/L to 10.0 g/L, and preferably 0.1 g/L to 5.00 g/L.

In a preferred embodiment of the present invention, water and a hydrophobic solvent may be further added to the mixture containing the onium salt represented by Formula (1) and the carboxylic acid represented by Formula (4) obtained in step (5) used in step (6).

The hydrophobic solvent may be a solvent for diluting the amine to be added. Alternatively, the hydrophobic solvent may be added alone to the mixture in step (6) without being used to dilute the amine. The hydrophobic solvent added to the mixture obtained in step (5) is preferably a solvent that undergoes phase separation from water. Examples of solvents that undergo phase separation from water include hexane, heptane, toluene, chloroform, dichloromethane, 2-ethylhexanol, cyclohexanol, 1-octanol, and ethyl acetate. The solvent is preferably chloroform, 2-ethylhexanol, cyclohexanol, or 1-octanol.

When the mixture obtained in step (5) used in step (6) contains water and the hydrophobic solvent, the added amine forms an amine-carboxylic acid salt and is extracted primarily into the hydrophobic solvent layer. On the other hand, the onium salt represented by Formula (1) is present in the aqueous layer. Thus, separating the solvent layer enables separation of the amine-carboxylic acid salt, thereby giving an aqueous layer containing the onium salt represented by Formula (1) in which the amount of the carboxylic acid represented by Formula (4) is reduced or is almost completely removed. It is difficult to remove the carboxylic acid of Formula (4) present together with the onium salt of Formula (1) by evaporation. However, water in the aqueous layer containing the onium salt of Formula (1) can be easily removed by evaporation to obtain the onium salt of Formula (1).

The mixture containing the onium salt represented by Formula (1) and the carboxylic acid represented by Formula (4) exhibits greatly reduced solubility of cellulose due to the presence of the carboxylic acid represented by Formula (4). However, performing step (6) of the production method of the present invention significantly improves the solubility of cellulose. For example, the solubility of cellulose can be greatly improved by removing 50% or more, 60% or more, 65% or more, 70% or more, 75% or more, 80% or more, 85% or more, 90% or more, 95% or more, or 100% of the carboxylic acid represented by Formula (4) from the mixture containing the onium salt represented by Formula (1) and the carboxylic acid represented by Formula (4).

When the amine is added in the form of an amine solution in which the amine is diluted with a solvent, and the separated liquid containing the onium salt represented by Formula (1) separated in step (6) contains the solvent, the solvent can be distilled off by heating and/or depressurizing the separated liquid.

In a preferred embodiment of the present invention, in step (1) of the method for producing an esterified polysaccharide, the onium salt represented by Formula (1) is of at least two types.

Specific examples of the onium salt represented by Formula (1) as a mixture of at least two types include a mixture of 1,3-dimethylimidazolium acetate and 1,3-diethylimidazolium acetate, a mixture of 1,3-dimethylimidazolium acetate and 1-ethyl-3-methylimidazolium acetate, a mixture of 1,3-diethylimidazolium acetate and 1-ethyl-3-methylimidazolium acetate, and a mixture of 1,3-dimethylimidazolium acetate, 1,3-diethylimidazolium acetate, and 1-ethyl-3-methylimidazolium acetate.

In a preferred embodiment of the present invention, in step (2) of the method for producing an esterified polysaccharide, the esterification agent represented by Formula (2) or Formula (3) is of at least two types.

Specific examples of the esterification agent represented by Formula (2) or Formula (3) as a mixture of at least two types include a mixture of acetic anhydride and propionic anhydride, a mixture of acetic anhydride and butyrate anhydride, and a mixture of isopropenyl acetate and vinyl butyrate.

In a preferred embodiment of the present invention, in step (1) described above of the method for producing an

esterified polysaccharide, the onium salt represented by Formula (1) is in the form of an onium salt solution in which the onium salt is diluted with an aprotic polar solvent.

Examples of aprotic polar solvents include, but are not particularly limited to, dimethyl sulfoxide, N,N-dimethylacetamide, N,N-dimethylformamide, N-methyl-2-pyrrolidone, acetonitrile, and pyridine. The aprotic polar solvent may contain two or more organic solvents. These organic solvents hardly dissolve polysaccharides on their own; however, when the solvents are used in combination with the onium salt (1) or with an onium salt composition, the solvents can contribute to, for example, improving the solubility of polysaccharides, accelerating the polysaccharide dissolution rate by reducing viscosity, improving the workability in the polysaccharide recovery process, and controlling the physical properties of the recovered polysaccharides.

In a preferred embodiment of the present invention, in step (7) described above of the method for producing an esterified polysaccharide, an amine represented by Formula (5) is added to the recovery liquid containing an onium salt to generate an amine-carboxylic acid salt, an onium salt-containing layer is separated from an amine-carboxylic acid salt-containing layer, and the separated onium salt-containing layer is recovered as an onium salt-containing recovery liquid.

The applications of the esterified polysaccharide products obtained according to the present invention are not particularly limited. For example, the esterified polysaccharide products obtained according to the present invention may be used in the field of textiles, such as fibers, ropes, nets, woven or knitted fabrics, felt, fleece, wood plastics, carbon fiber composite materials, glass fiber composite materials, cellulose nanofiber composite materials, lignocellulose nanofiber composite materials, and other textile composite materials; the field of films, such as polarizing plate protection films and optical films; the field of plastics, such as for medical devices, electronic component materials, packaging materials, eyeglass frames, pipes, rods, tools, tableware, and toys; and the field of civil engineering, such as for concrete viscosity modifiers and clay mineral viscosity modifiers.

## Examples

The following describes the present invention in detail with reference to Examples. However, the present invention is not limited to these Examples in any way.

The 1,3-bis(3-methoxypropyl)imidazolium acetate ([(MeOPr)2Im] [AcO]) used in the Examples was produced as described in Production Example 1 below.

### Production Example 1

A 5 L three-necked reactor purged with nitrogen was charged with 260 g (3.22 mol in terms of formaldehyde) of a 37 wt% aqueous formaldehyde solution (produced by Tokyo Chemical Industry Co., Ltd.), 290 g (4.83 mol) of acetic acid (produced by Junsei Chemical Co., Ltd.), 573 g (6.43 mol) of 3-methoxypropylamine (produced by Tokyo Chemical Industry Co., Ltd.), and 461 g (3.22 mol in terms of glyoxal) of a 40 wt% aqueous glyoxal solution (produced by Tokyo Chemical Industry Co., Ltd.). The resulting mixture was heated to 40°C and stirred for 3 hours to give a yellow transparent liquid.

The results of 1H NMR data of the obtained yellow transparent liquid are shown below. 1H NMR (DMSO-d6) δ (ppm) = 9.41 (s, 1H), 7.78 (d, 2H), 4.22 (t, 4H), 3.33 (t, 4H), 3. 22 (s, 6H), 2.07-2.00 (m, 4H), 1.56 (s, 3H)

The results of 1H NMR data indicate that the obtained yellow transparent liquid was 1,3-bis(3-methoxypropyl) imidazolium acetate ([(MeOPr)2Im] [AcO]).

The amount of the obtained 1,3-bis(3-methoxypropyl)imidazolium acetate ([(MeOPr)2Im] [AcO]) was 811 g, and the yield was 93%.

The 1-ethyl-3-methylimidazolium acetate used in Example 2 was one produced by Tokyo Chemical Industry Co., Ltd.

### Example 1

1,3-Di(3-methoxypropyl)imidazolium acetate (9.20 g) and cellulose (1.02 g) (Avicel (registered trademark) PH-101) were placed in a vial and stirred at 80°C for 1 hour. After one hour, the state of the resulting product was observed, which confirmed that cellulose had been completely dissolved.

While cooling this reaction solution in an ice bath, acetic anhydride (6.75 g, 3 equivalents per glucose unit) (produced by FUJIFILM Wako Pure Chemical Corporation) was added. After the addition, the mixture was allowed to return to room temperature (25°C) and stirred for 2 hours.

After the reaction, the reaction solution was poured into methanol (100 mL) to precipitate a solid. The precipitated solid was filtered, washed, and then dried in vacuum to give a white solid.

The IR data of the obtained white solid are shown below. The wavelengths of C=O stretching vibration, C-H symmetric bending vibration, and C-O stretching vibration were confirmed with FT-IR (produced by JASCO Corporation):

IR 1738 $cm^{-1}$ (C=O stretching vibration), 1365 $cm^{-1}$ (C-H symmetric bending vibration), 1211 $cm^{-1}$ (C-O stretching vibration).

From the results of IR data, it was confirmed that the obtained white solid was acetylated cellulose.

In addition, the remaining hydroxyl groups in the glucose, which is a molecule constituting the obtained acetyl cellulose, were modified with a large excess of benzoyl chloride (produced by FUJIFILM Wako Pure Chemical Corporation), and the acetylation degree was measured by 1H NMR analysis. The measurement results are shown below.

Acetylation degree: 2.90

In the following manner, acetic acid was removed from the filtrate containing 1,3-di(3-methoxypropyl)imidazolium acetate and acetic acid.

The filtrate was concentrated to remove methanol. To the concentrated filtrate (2.00 g), ion-exchanged water (6.04 g), 2-ethylhexanol (4.00 g) (produced by Junsei Chemical Co., Ltd.), and oleylamine (2.98 g) (produced by Sigma) were added and stirred.

The mixture was separated into an aqueous layer containing 1,3-di(3-methoxypropyl)imidazolium acetate and an organic layer containing an oleylamine-acetic acid salt and 2-ethylhexanol. The obtained aqueous layer was concentrated and dried, and then 1H NMR was measured to determine the acetic acid removal rate according to the following formula.

Acetic acid removal rate (%) = (1-(integral value of $CH_3$ after removal-3.00)/(integral value of $CH_3$ before removal-3.00))$\times$100

Acetic acid removal rate (%) = 98.05

The 1,3-di(3-methoxypropyl)imidazolium acetate (0.91 g) from which acetic acid was removed and cellulose (0.10 g) were placed in a vial and stirred at 80°C for 1 hour.

After one hour, the state of the resulting product was observed, which confirmed that cellulose had been completely dissolved.

While cooling this reaction solution in an ice bath, acetic anhydride (0.68 g, 3 equivalents per glucose unit) (produced by FUJIFILM Wako Pure Chemical Corporation) was added. After the addition, the mixture was allowed to return to room temperature (25°C) and stirred for 2 hours.

After the reaction, the reaction solution was poured into methanol (50 mL) to precipitate a solid. The precipitated solid was filtered, washed, and then dried in vacuum to give a white solid.

The IR data of the obtained white solid are shown below. The wavelengths of C=O stretching vibration, C-H symmetric bending vibration, and C-O stretching vibration were confirmed with FT-IR (produced by JASCO Corporation): IR 1738 $cm^{-1}$ (C=O stretching vibration), 1365 $cm^{-1}$ (C-H symmetric bending vibration), 1211 $cm^{-1}$ (C-O stretching vibration) .

From the results of IR data, it was confirmed that the obtained white solid was acetylated cellulose.

In addition, the remaining hydroxyl groups in the glucose, which is a molecule constituting the obtained acetyl cellulose, were modified with a large excess of benzoyl chloride (produced by FUJIFILM Wako Pure Chemical Corporation), and the acetylation degree was measured by 1H NMR analysis. The measurement results are shown below.

Acetylation degree: 2.92

Comparative Example 1

To the filtrate (0.99 g) obtained in Example 1 before removing acetic acid, cellulose (0.10 g) (Avicel (registered trademark) PH-101) was added, and the mixture was stirred at 100°C for 3 hours. After 3 hours, the state of the resulting product was observed, which confirmed that cellulose had not dissolved at all.

Example 2

1-Ethyl-3-methylimidazolium acetate (1.80 g) and cellulose (0.20 g) (Avicel (registered trademark) PH-101) were placed in a vial and stirred at 80°C for one hour. After one hour, the state of the resulting product was observed, which confirmed that cellulose had been completely dissolved.

While cooling this reaction solution in an ice bath, acetic anhydride (1.37 g, 3 equivalents per glucose unit) (produced by FUJIFILM Wako Pure Chemical Corporation) was added. After the addition, the mixture was allowed to return to room temperature (25°C) and stirred for 2 hours.

After the reaction, the reaction solution was poured into methanol (50 mL) to precipitate a solid. The precipitated

solid was filtered, washed, and then dried in vacuum to give a pale yellow solid.

The IR data of the obtained white solid are shown below. The wavelengths of C=O stretching vibration, C-H symmetric bending vibration, and C-O stretching vibration were confirmed with FT-IR (produced by JASCO Corporation): IR 1738 $cm^{-1}$ (C=O stretching vibration), 1365 $cm^{-1}$ (C-H symmetric bending vibration), 1211 $cm^{-1}$ (C-O stretching vibration) .

From the results of IR data, it was confirmed that the obtained white solid was acetylated cellulose.

In addition, the remaining hydroxyl groups in the glucose, which is a molecule constituting the obtained acetyl cellulose, were modified with a large excess of benzoyl chloride (produced by FUJIFILM Wako Pure Chemical Corporation), and the acetylation degree was measured by 1H NMR analysis. The measurement results are shown below.

Acetylation degree: 2.77

In the following manner, acetic acid was removed from the filtrate containing 1-ethyl-3-methylimidazolium acetate and acetic acid: The filtrate was concentrated to remove methanol. To the concentrated filtrate (2.82 g), ion-exchanged water (5.43 g), 2-ethylhexanol (3.61 g) (produced by Junsei Chemical Co., Ltd.), and di-2-ethylhexylamine (3.81 g) (produced by Koei Chemical Co., Ltd.) were added and stirred.

The mixture was separated into an aqueous layer containing 1-ethyl-3-methylimidazolium acetate and an organic layer containing di-2-ethylhexylamine-acetic acid salt and 2-ethylhexanol. The obtained aqueous layer was concentrated and dried, and then 1H NMR was measured to determine the acetic acid removal rate according to the following formula.

Acetic acid removal rate (%) = (1-(integral value of $CH_3$ after removal-3.00)/(integral value of $CH_3$ before removal-3.00))$\times$100

Acetic acid removal rate (%) = 96.17

The 1-ethyl-3-methylimidazolium acetate (0.91 g) from which acetic acid was removed and cellulose (0.11 g) were placed in a vial and stirred at 80°C for 1 hour.

After one hour, the state of the resulting product was observed, which confirmed that cellulose had been completely dissolved.

While cooling this reaction solution in an ice bath, acetic anhydride (0.67 g, 3 equivalents per glucose unit) was added. After the addition, the mixture was allowed to return to room temperature (25°C) and stirred for 2 hours.

After the reaction, the reaction solution was poured into methanol (100 mL) to precipitate a solid. The precipitated solid was filtered, washed, and then dried in vacuum to give a white solid.

The IR data of the obtained white solid are shown below. The wavelengths of C=O stretching vibration, C-H symmetric bending vibration, and C-O stretching vibration were confirmed with FT-IR (produced by JASCO Corporation): IR 1738 $cm^{-1}$ (C=O stretching vibration), 1365 $cm^{-1}$ (C-H symmetric bending vibration), 1211 $cm^{-1}$ (C-O stretching vibration).

From the results of IR data, it was confirmed that the obtained white solid was acetylated cellulose.

In addition, the remaining hydroxyl groups in the glucose, which is a molecule constituting the obtained acetyl cellulose, were modified with a large excess of benzoyl chloride, and the acetylation degree was measured by 1H NMR analysis. The measurement results are shown below.

Acetylation degree: 2.97

## Industrial Applicability

According to the present invention, a method for producing an esterified polysaccharide, the method being capable of further removing or reducing carboxylic acid without substantially using a catalyst for esterifying cellulose, can be provided, and the recovery liquid containing an onium salt recovered by this production method can be recycled.

## Claims

**1.** A method for producing an esterified polysaccharide, comprising the following steps (1) to (8):

step (1) of mixing an onium salt represented by Formula (1) with a polysaccharide to dissolve the polysaccharide in the onium salt:

Formula (1):

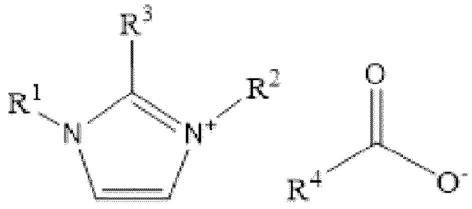

(1)

wherein

$R^1$ and $R^2$ are identical or different, and each represents a hydrocarbon group optionally containing a heteroatom,
$R^1$ and $R^2$ may contain a branched and/or cyclic structure and/or a double bond,
$R^3$ represents a hydrogen atom or a $C_1$-$C_5$ hydrocarbon group, and $R^4$ represents a $C_1$-$C_{12}$ hydrocarbon group and may contain a heteroatom, a double bond, a branched structure, and/or a cyclic structure;

step (2) of adding an esterification agent represented by Formula (2) or Formula (3) to a mixture obtained in step (1) to generate an esterified polysaccharide:

Formula (2):

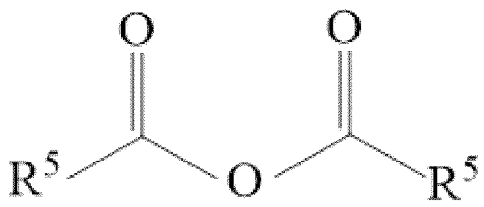

wherein
$R^5$ represents a $C_1$-$C_{12}$ hydrocarbon group and may contain a heteroatom, a double bond, a branched structure, and/or a cyclic structure,

Formula (3):

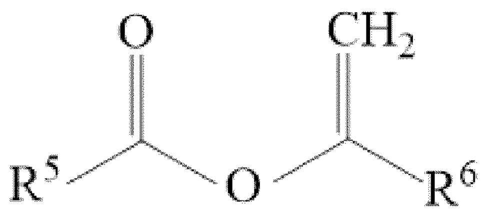

wherein

$R^5$ represents a $C_1$-$C_{12}$ hydrocarbon group and may contain a heteroatom, a double bond, a branched structure, and/or a cyclic structure, and
$R^6$ represents a hydrogen atom or a methyl group;

step (3) of adding to a mixture obtained in step (2) at least one solvent in which esterified polysaccharides are insoluble, selected from water, alcohols, and ketones, to precipitate the esterified polysaccharide;
step (4) of filtering the esterified polysaccharide precipitated in step (3) to separate the esterified polysaccharide from a filtrate containing the onium salt represented by Formula (1), a carboxylic acid represented by Formula (4), and the solvent in which esterified polysaccharides are insoluble:

Formula (4):

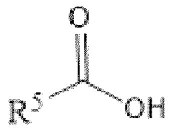

wherein
$R^5$ represents a $C_1$-$C_{12}$ hydrocarbon group and may contain a heteroatom, a double bond, a branched structure, and/or a cyclic structure;
step (5) of heating and/or depressurizing the filtrate separated in step (4) to remove from the filtrate the solvent in which esterified polysaccharides are insoluble;
step (6) of adding an amine represented by Formula (5) to a mixture containing the onium salt represented by Formula (1) and the carboxylic acid represented by Formula (4) obtained in step (5) to generate an amine-carboxylic acid salt, and separating an onium salt-containing layer from an amine-carboxylic acid salt-containing layer:

Formula (5):

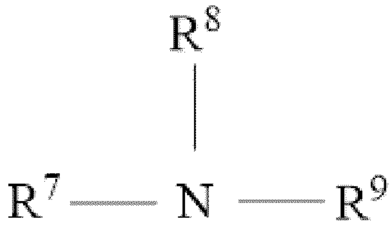

wherein
$R^7$, $R^8$, and $R^9$ may be identical or different, and each represents a hydrogen atom or a $C_1$-$C_{18}$ hydrocarbon group and may contain a double bond, a branched structure, and/or a cyclic structure, and the total number of carbon atoms in $R^7$, $R^8$, and $R^9$ is 8 or more;
step (7) of recovering the onium salt-containing layer separated in step (6) as an onium salt-containing recovery liquid; and
step (8) of introducing the recovery liquid recovered in step (7) into step (1).

**2.** The method for producing an esterified polysaccharide according to claim 1,
wherein in step (6), water and/or a hydrophilic solvent is added to the mixture containing the onium salt represented by Formula (1) and the carboxylic acid represented by Formula (4) obtained in step (5).

**3.** The method for producing an esterified polysaccharide according to claim 1,
wherein in step (6),

(i) the amine represented by Formula (5) is added, or
(ii) an amine solution in which the amine is diluted with a hydrophobic solvent is added,

to the mixture containing the onium salt represented by Formula (1) and the carboxylic acid represented by Formula (4) obtained in step (5).

**4.** The method for producing an esterified polysaccharide according to claim 1,
wherein in step (1), the onium salt represented by Formula (1) is of at least two types.

**5.** The method for producing an esterified polysaccharide according to claim 1,
wherein in step (2), the esterification agent represented by Formula (2) or Formula (3) is of at least two types.

**6.** The method for producing an esterified polysaccharide according to claim 1,
wherein in step (1), the onium salt represented by Formula (1) is in the form of an onium salt solution in which the onium salt is diluted with an aprotic polar solvent.

**7.** The method for producing an esterified polysaccharide according to claim 1, wherein in step (7), the amine represented by Formula (5) is added to the onium salt-containing recovery liquid to generate an amine-carboxylic acid salt, an onium salt-containing layer is separated from an amine-carboxylic acid salt-containing layer, and the separated onium salt-containing layer is recovered as an onium salt-containing recovery liquid.

Europäisches Patentamt
European Patent Office
Office européen des brevets

# EUROPEAN SEARCH REPORT

Application Number
EP 24 22 0281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2008/194808 A1 (BUCHANAN CHARLES MICHAEL [US] ET AL) 14 August 2008 (2008-08-14) * examples 26, 27; claims 1, 8-11 * ----- | 1-7 | INV. C08B3/00 C08B3/06 |
| A | US 2010/029927 A1 (BUCHANAN CHARLES MICHAEL [US] ET AL) 4 February 2010 (2010-02-04) * [0190]-[0194]; claim 1 * ----- | 1-7 | |

TECHNICAL FIELDS SEARCHED (IPC)
C08B

The present search report has been drawn up for all claims

1

| Place of search | Date of completion of the search | Examiner |
|---|---|---|
| Munich | 25 April 2025 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 22 0281

This annex lists the patent family members relating to the patent documents cited in the above-mentioned European search report. The members are as contained in the European Patent Office EDP file on
The European Patent Office is in no way liable for these particulars which are merely given for the purpose of information.

25-04-2025

| Patent document cited in search report | Publication date | Patent family member(s) | Publication date |
|---|---|---|---|
| US 2008194808 A1 | 14-08-2008 | CN 101657428 A | 24-02-2010 |
| | | CN 101657470 A | 24-02-2010 |
| | | CN 101668779 A | 10-03-2010 |
| | | CN 102603643 A | 25-07-2012 |
| | | CN 102675207 A | 19-09-2012 |
| | | CN 103467606 A | 25-12-2013 |
| | | EP 2118070 A1 | 18-11-2009 |
| | | EP 2118143 A1 | 18-11-2009 |
| | | EP 2121766 A1 | 25-11-2009 |
| | | JP 5558832 B2 | 23-07-2014 |
| | | JP 5860014 B2 | 16-02-2016 |
| | | JP 2010518166 A | 27-05-2010 |
| | | JP 2010518244 A | 27-05-2010 |
| | | JP 2010518245 A | 27-05-2010 |
| | | JP 2014012852 A | 23-01-2014 |
| | | KR 20090109106 A | 19-10-2009 |
| | | KR 20090109107 A | 19-10-2009 |
| | | KR 20090109556 A | 20-10-2009 |
| | | US 2008194807 A1 | 14-08-2008 |
| | | US 2008194808 A1 | 14-08-2008 |
| | | US 2008194834 A1 | 14-08-2008 |
| | | US 2012095207 A1 | 19-04-2012 |
| | | US 2012142910 A1 | 07-06-2012 |
| | | WO 2008100566 A1 | 21-08-2008 |
| | | WO 2008100569 A1 | 21-08-2008 |
| | | WO 2008100577 A1 | 21-08-2008 |
| US 2010029927 A1 | 04-02-2010 | CN 102124031 A | 13-07-2011 |
| | | CN 102977216 A | 20-03-2013 |
| | | CN 103923352 A | 16-07-2014 |
| | | EP 2313439 A1 | 27-04-2011 |
| | | EP 3239179 A1 | 01-11-2017 |
| | | JP 2011530643 A | 22-12-2011 |
| | | KR 20110043757 A | 27-04-2011 |
| | | US 2010029927 A1 | 04-02-2010 |
| | | US 2012101269 A1 | 26-04-2012 |
| | | WO 2010019244 A1 | 18-02-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010518244 A